# EUROPÄISCHE PATENTSCHRIFT

(11) **EP 3 117 371 B1**
(45) Veröffentlichungstag und Bekanntmachung des Hinweises auf die Patenterteilung: **04.05.2022**
(21) Anmeldenummer: 15708502.8
(22) Anmeldetag: 05.03.2015
(51) Int. Cl.: G06K 19/077

(54) **IN EINEN ROHLING EINES WERT- ODER SICHERHEITSDOKUMENTS INTEGRIERBARES ANZEIGEMODUL, WERT- ODER SICHERHEITSDOKUMENT MIT DEM ANZEIGEMODUL UND VERFAHREN ZUM VERIFIZIEREN DES WERT- ODER SICHERHEITSDOKUMENTS**
DISPLAY MODULE WHICH CAN BE INTEGRATED INTO A BLANK OF A VALUE DOCUMENT OR SECURITY DOCUMENT, VALUE DOCUMENT OR SECURITY DOCUMENT WITH SAID DISPLAY MODULE, AND METHOD FOR VERIFYING THE VALUE DOCUMENT OR SECURITY DOCUMENT
MODULE DE SIGNALISATION À INTÉGRER DANS L'ÉBAUCHE D'UN DOCUMENT DE VALEUR OU DE SÉCURITÉ, DOCUMENT DE VALEUR OU DE SÉCURITÉ DOTÉ DUDIT MODULE DE SIGNALISATION, ET PROCÉDÉ DE VÉRIFICATION DU DOCUMENT DE VALEUR OU DE SÉCURITÉ

(30) Priorität: 12.03.2014 DE 102014204552
(43) Veröffentlichungstag der Anmeldung: 18.01.2017
(73) Patentinhaber: Bundesdruckerei GmbH, 10969 Berlin (DE)
(72) Erfinder: FISCHER, Jörg, 13053 Berlin (DE); TIETKE, Markus, 12439 Berlin (DE); TRÖLENBERG, Stefan, 15749 Mittenwalde OT Ragow (DE)
(74) Vertreter: Patentanwälte Bressel und Partner mbB
(86) Internationale Anmeldenummer: PCT/EP2015/054611
(87) Internationale Veröffentlichungsnummer: WO 2015/135828

(56) Entgegenhaltungen:
- WO-A1-03/057502
- DE-A1-102007 000 881
- DE-A1-102007 000 883

## Beschreibung

Die vorliegende Erfindung betrifft ein Anzeigemodul und ein Wert- oder Sicherheitsdokument, insbesondere ein mit einer Transponderschaltung versehenes Wert- oder Sicherheitsdokument, in dem das Anzeigemodul integriert ist. Mit der Integration des Anzeigemoduls in dem Wert- oder Sicherheitsdokument wird eine neuartige Funktionalität des Dokuments erreicht. Des Weiteren werden neuartige Sicherheitsmerkmale geschaffen, mit denen die Echtheit des Dokuments geprüft (verifiziert) und/oder mit denen eine das Dokument und/oder den Dokumenteninhaber oder einen Gegenstand, dem das Dokument zugeordnet ist, betreffende Information codiert werden kann.

Wert- oder Sicherheitsdokumente sind bekannt. Es handelt sich häufig um Identifikationsdokumente, wie ein Passdokument oder einen Personalausweis, oder um Dokumente, die einen Wert verbriefen, wie Bank- und Kreditkarten, Banknoten, Wertpapiere und dergleichen. Derartige Dokumente weisen zu deren Echtheitsverifikation Sicherheitsmerkmale auf. Außerdem können Informationen in Sicherheitsmerkmalen codiert sein, die für die Allgemeinheit entweder leicht oder nicht leicht oder überhaupt nicht ohne spezielle Kenntnisse und/oder Hilfsmittel erkennbar sind. In den letzteren Fällen sind nur fachkundige Personen in der Lage, derartige Informationen wahrzunehmen und zu lesen.

Um codierte Information zu speichern, können insbesondere Bank-, Kredit- und andere Barzahlungskarten elektronische Speichermedien enthalten, beispielsweise einen integrierten Halbleiterchip. Auf diesem Chip können Identifikationsdaten abgelegt sein. Des Weiteren können auch in Identifikationsdokumenten integrierte Halbleiterchips enthalten sein, in denen bestimmte Daten des Ausweisinhabers gespeichert sind. Zum Datenaustausch zwischen einem externen Schreib- und Lesegerät (Reader) und dem Chip in der Karte kann in einer Ausführungsform ein elektrischer Kontakt zwischen dem externen Gerät und dem Chip über Kontaktflächen hergestellt sein, die in das Dokument integriert und die mit dem Chip verbunden sind.

Ein Aufbau für ein einen Halbleiterchip enthaltendes Chipmodul, das in eine Karte integriert ist und äußere Kontaktflächen für den Datenaustausch mit einem Lesegerät aufweist, ist in WO 98/06063 A1 angegeben. Die in dieser Druckschrift beschriebene Karte weist einen integrierten Schaltkreis auf, der in ein Modul eingebettet ist, das einen kombinierten Anschluss mit externen Kontaktflächen sowie für einen kontaktlosen Datenaustausch eine Transponderantenne aufweist.

Aus DE 10 2010 028 444 A1 geht ein Dokument mit einem Chip und einer Antenne zur induktiven Einkopplung von Energie hervor. Die Antenne dieses Dokuments weist eine äußere Windung, zumindest eine mittlere Windung und eine innere Windung auf, wobei der Chip mit der äußeren und der inneren Windung in elektrischem Kontakt steht. Die mittlere Windung überbrückt den Chip in einem Überbrückungsbereich der Antenne. Die Antenne ist spiralförmig ausgebildet.

Aus DE 10 2006 008 345 B3 ist ein Sicherheits- oder Wertdokument bekannt, das eine elektronische Transponderschaltung mit einer damit verbundenen Transponderantenne aufweist. Das Dokument ist ferner mit einer Anzeige ausgestattet, welche ein optisches, akustisches oder mechanisches Signal bei oder nach einer Aktivierung der Transponderantenne erzeugt. Falls ein optisches Signal erzeugt wird, ändern sich die optischen Eigenschaften der Anzeige durch Anlegen einer elektrischen Spannung bzw. einer Potenzialdifferenz an diese.

DE 10 2007 016 777 A1 gibt ein Sicherheits- oder Wertdokument mit einem Kartenkörper und einem in den Kartenkörper eingebetteten Displaymodul an. Hierzu können zunächst ein Teil des Kartenkörpers ausgestanzt und dann das Modul in diese Kavität eingesetzt werden. Auf der Unterseite des Moduls kann sich eine Struktur in Form von Erhebungen befinden, welche in eine entsprechende komplementäre Struktur im Kartenkörper greift, sodass die Haftung zwischen dem Kartenkörper und dem Modul verbessert wird. Diese Struktur kann außerdem als Sicherheitsmerkmal ausgebildet sein. Beispielsweise können sich an der Unterseite des Moduls stegartige Erhebungen befinden, die durch die Rückseite der Karte zunächst herausragen und anschließend thermisch oder durch Ultraschall irreversibel mit dem Kartenkörper verbunden werden und als leicht erkennbares Merkmal ein Muster auf der Dokumentenrückseite bilden.

Die WO 03/057502 beschreibt ein Wert- oder Sicherheitsdokument mit mindestens einem LED-Element zur Anzeige eines Sicherheitsmerkmals.

Die DE 10 2007 000 881 A1 und die DE 10 2007 000 883 A1 zeigen beide ein Dokument mit einer integrierten Anzeigevorrichtung. Hierbei können Bildelemente der Anzeigevorrichtung jeweils unterschiedlich angesteuert werden.

Es hat sich gezeigt, dass der kontaktlose Datenaustausch mit dazu vorgesehenen Dokumenten nicht immer ausreichend bedienungsfreundlich ist. Insbesondere kann es vorkommen, dass der Datenaustausch mit einem Lesegerät fehlschlägt, ohne dass die das Dokument bedienende Person die Ursachen für diese Fehlfunktion schnell und sicher erkennen kann. Darüber hinaus besteht ein ständiger Bedarf an neuartigen Sicherheitsmerkmalen, die ein Dokument gegen eine Fälschung und/oder Verfälschung und/oder Kopie sichern, wobei eine Manipulation des Dokuments anhand derartiger Sicherheitsmerkmale von beliebigen Personen schnell und einfach erkennbar sein soll (Level 1-Sicherheitsmerkmal). Vorzugsweise soll sich das Sicherheitsmerkmal in einer gegen Fälschung und/oder Verfälschung und/oder Kopie sicheren inneren Produktlage befinden. Der vorliegenden Erfindung liegt darüber hinaus die wesentliche weitere Aufgabe zugrunde, ein kostengünstig, einfach und schnell realisierbares, insbesondere individualisierendes, Sicherheitsmerkmal zu schaffen.

Soweit in der Beschreibung und in den Ansprüchen der vorliegenden Anmeldung der Begriff ,Wert- oder Sicherheitsdokument verwendet wird, ist darunter beispielsweise ein Reisepass, Personalausweis, Führerschein oder eine andere ID-Karte oder ein Zugangskontrollausweis, ein Fahrzeugschein, Fahrzeugbrief, Visum, Scheck, Zahlungsmittel, insbesondere eine Banknote, eine Scheck-, Bank-, Kredit- oder Barzahlungskarte, Kundenkarte, Gesundheitskarte, Chipkarte, ein Firmenausweis, Berechtigungsnachweis, Mitgliedsausweis, Geschenk- oder Einkaufsgutschein, Frachtbrief oder ein sonstiger Berechtigungsnachweis, Steuerzeichen, Postwertzeichen, Ticket, (Spiel-)Jeton, Haftetikett (beispielsweise zur Produktsicherung) oder ein anderes ID-Dokument zu verstehen. Das Dokument ist vorzugsweise eine Smartcard. Das Sicherheits- oder Wertdokument kann im ID 1-, ID 2-, ID 3- oder in irgendeinem anderen Format vorliegen, beispielsweise in Heftform, wie bei einem passähnlichen Gegenstand. Ein Sicherheits- oder Wertdokument ist im Allgemeinen ein Laminat aus mehreren Dokumentenlagen, die passergenau unter Wärmeeinwirkung und unter erhöhtem Druck flächig miteinander verbunden sind. Alternativ können diese Dokumente auch durch Spritzgießen oder Extrudieren hergestellt werden. Die Dokumente sollen den normierten Anforderungen genügen, beispielsweise ISO/IEC 10373, 7810, 14443. Die Dokumentenlagen bestehen vorzugsweise aus einem Dokumententrägermaterial, das sich für eine Lamination eignet.

Soweit in der Beschreibung und in den Ansprüchen der vorliegenden Anmeldung der Begriff 'Sicherheitsmerkmal' genannt wird, ist darunter gemäß der vorliegenden Erfindung zum einen ein auf einen Betrachter wirkender Eindruck zu verstehen, der durch optisch wahrnehmbare Gestaltungen des Anzeigemoduls erzeugt wird. Zum anderen kann unter diesem Begriff auch der auf eine Person wirkende haptische Eindruck zu verstehen sein, der durch dreidimensionale Strukturen ("Hoch-/Tiefprägung") an der Oberfläche des Dokuments, die von dem Anzeigemodul verursacht werden, hervorgerufen wird. Derartige Strukturen sind vorzugsweise taktil wahrnehmbar und zwar dann, wenn sich diese Strukturen um eine Mindesthöhe gegenüber einer umgebenden Fläche, vorzugsweise einer Hochglanzoberfläche, erheben oder gegenüber dieser abgesenkt sind, beispielsweise um mindestens 30 µm. Gegebenenfalls kann das Sicherheitsmerkmal auch akustisch wahrnehmbar sein, wenn ein entsprechender Signalgeber in bzw. auf dem Anzeigemodul integriert ist und dieser Geber mittels einer hierfür vorgesehenen elektrischen Schaltung aktiviert wird.

Soweit in der Beschreibung und in den Ansprüchen einzelne Begriffe im Singular verwendet werden, beispielsweise 'Anzeigemodul', 'Anzeigeschaltkreis', 'Antennenleiterbahn', ,Anzeigeelement', 'Transponderschaltung', 'Antenne', 'Halbleiterchip', so sind diese Begriffe jeweils auch im Plural zu verstehen, also beispielsweise 'Anzeigemodule', 'Anzeigeschaltkreise', ,Antennenleiterbahnen', 'Anzeigeelemente', 'Transponderschaltungen', 'Antennen', 'Halbleiterchips', sofern nicht ausdrücklich etwas anderes angegeben ist. In entsprechender Weise gilt auch das Umgekehrte, nämlich dass die genannten Begriffe, wenn sie im Plural verwendet werden, auch in ihrer Singularbedeutung zu verstehen sein sollen, sofern nicht ausdrücklich etwas anderes angegeben ist.

Die vorstehend genannten Probleme werden gemäß einem ersten Aspekt der vorliegenden Erfindung durch das erfindungsgemäße Anzeigemodul gelöst.

Die vorstehend genannten Probleme werden gemäß einem zweiten Aspekt der vorliegenden Erfindung durch das erfindungsgemäße Wert- oder Sicherheitsdokument, das das mindestens eine derartige Anzeigemodul enthält, gelöst.

Die vorstehend genannten Probleme werden gemäß einem dritten Aspekt der vorliegenden Erfindung durch ein Verfahren zum Verifizieren (der Echtheit) des erfindungsgemäßen Wert- oder Sicherheitsdokuments gelöst.

Die Erfindung ist in den Ansprüchen 1, 8 und 12 definiert.

Das erfindungsgemäße Anzeigemodul ist in den Rohling des Wert- oder Sicherheitsdokuments integrierbar. Zu diesem Zweck weist es die hierfür erforderlichen äußeren Abmessungen auf. Beispielsweise kann es ausreichend dünn sein, um in den Rohling integrierbar zu sein. Ferner hat es eine Grundfläche, die zumindest in einer bevorzugten Ausführungsform der Erfindung kleiner ist als die Fläche des Dokuments, damit es eines der primären Sicherheitsmerkmale, nämlich eine Rand/Umriss-Strukturierung, aufweist. Außerdem ist es hinsichtlich der Auswahl des Materials, aus dem es gebildet ist, kompatibel mit dem Dokumentenrohling.

Unter einem (Dokumenten-)Rohling ist vorliegend ein Vorprodukt des Wert- oder Sicherheitsdokuments zu verstehen, das zumindest noch nicht das Anzeigemodul enthält. Beispielsweise kann der Rohling durch einen Polymerlagenstapel mit einer Aussparung (Kavität) gebildet sein, in die das Anzeigemodul einsetzbar ist (siehe hierzu die Ausführungsbeispiele in DE 10 2007 016 777 A1, das hiermit durch Bezugnahme in die vorliegende Anmeldung aufgenommen wird, zumindest soweit dies die Ausführungsbeispiele betrifft).

Das erfindungsgemäße Anzeigemodul weist einen Anzeigeträger und mindestens einen auf dem Anzeigeträger angeordneten Anzeigeschaltkreis auf. Der mindestens eine Anzeigeschaltkreis ist durch jeweils mindestens eine Antennenleiterbahn und mindestens ein mit der mindestens einen Antennenleiterbahn elektrisch verbundenes Anzeigeelement gebildet. Die mindestens eine Antennenleiterbahn und das mindestens eine Anzeigeelement sind vorzugsweise auf dem Anzeigeträger befestigt. Der Umriss bzw. Rand des mindestens einen Anzeigemoduls weisen erfindungsgemäß und gegebenenfalls zusätzlich die mindestens eine Antennenleiterbahn Gestaltungen auf, die jeweils eine Information codieren (primäre Sicherheitsmerkmale).

Das erfindungsgemäße Wert- oder Sicherheitsdokument weist das mindestens eine erfindungsgemäße Anzeigemodul auf.

Das Verfahren umfasst die folgenden Verfahrensschritte:
(a) Bereitstellen des mindestens ein Anzeigemodul aufweisenden Wert- oder Sicherheitsdokuments, wobei das mindestens eine Anzeigemodul jeweils mindestens einen Anzeigeschaltkreis mit jeweils mindestens einer Antennenleiterbahn und mit jeweils mindestens einem mit dieser elektrisch verbundenen Anzeigeelement aufweist und wobei das mindestens eine Anzeigemodul in dem Wert- oder Sicherheitsdokument integriert ist und wobei das Wert- oder Sicherheitsdokument außerdem einen Transponderschaltkreis aufweist;
(b) Durchführen eines Datenaustausches zwischen dem Transponderschaltkreis und einem Schreib-/Lesegerät vermittels eines elektromagnetischen Wechselfeldes;
(c) Erzeugen eines elektrischen Signals in dem mindestens einen Anzeigeelement des mindestens einen Anzeigemoduls aufgrund des elektromagnetischen Wechselfeldes; und
(d) Erzeugen eines von einem Betrachter oder einem Verifikationsgerät erfassbaren Signals durch das mindestens eine Anzeigeelement.

Durch die Integration des mindestens einen Anzeigemoduls, vorzugsweise genau eines Anzeigemoduls, in den Rohling des Wert- oder Sicherheitsdokuments, ist insbesondere dann, wenn das Wert- oder Sicherheitsdokument zusätzlich eine Transponderschaltung aufweist, die Möglichkeit gegeben, ein auf die Transponderschaltung einwirkendes elektromagnetisches Feld mittels des Anzeigemoduls separat zu detektieren und dessen Vorhandensein mittels des Anzeigeelements für eine beliebige Person wahrnehmbar zu machen. Denn mit herkömmlichen Transponderschaltungen ist es nicht ohne weiteres möglich, eine derartige Anzeige zu realisieren. Dies liegt daran, dass RFID-Halbleiterchips (Sicherheits-Chips) für Transponderschaltungen keine Ausgänge für die Realisierung derartiger Anzeigefunktionen aufweisen. Es wäre beispielsweise auch schwierig, ein Signal, das den Schreib-/Leseprozess anzeigt, aus der Transponderschaltung, etwa aus der Transponderantenne, auszukoppeln, weil damit der Schreib-/Leseprozess nachhaltig gestört würde. Insbesondere würde die Geschwindigkeit der Datenübertragung erheblich herabgesetzt.

Durch die Anzeige gemäß der vorliegenden Erfindung mittels des im Anzeigemodul enthaltenen Anzeigeelements kann der Person signalisiert werden, dass ein Schreib-/Leseprozess über den Reader möglich ist. Falls der Schreib-/Leseprozess dennoch fehlschlägt, kann die Person dann aufgrund der Anzeige erkennen, dass das elektromagnetische Feld vorhanden ist. Außerdem kann das Dokument auch dazu ausgebildet sein, den Schreib-/Leseprozess wahrnehmbar zu machen, sodass eine Person erkennt, dass und wann der Schreib-/Leseprozess stattfindet. Hierzu wird der Schreib-/Leseprozess von dem Anzeigeelement angezeigt. Somit wird die Benutzerfreundlichkeit eines mit einer Transponderschaltung versehenen Dokuments erheblich verbessert.

Des Weiteren werden durch die Ausbildung des Anzeigemoduls als visuell wahrnehmbares Sicherheitselement, und zwar durch die erkennbare spezielle Gestaltung der Form der Antennenleiterbahn und/oder des Randes/Umrisses des Anzeigemoduls in dem Dokument, zusätzliche Sicherheitsmerkmale geschaffen, das als Echtheitsmerkmale für das Dokument einsetzbar sind.

Die Gestaltung des Anzeigemoduls und dessen Integration in den Rohling des Wert- oder Sicherheitsdokuments ist darüber hinaus außerordentlich einfach und kostengünstig realisierbar, nämlich innerhalb des üblichen Herstellprozesses des Dokuments.

Die mindestens eine Antennenleiterbahn des erfindungsgemäßen Anzeigemoduls ist vorzugsweise durch jeweils mindestens eine Schleife (Windung) gebildet, durch die das zu detektierende elektromagnetische Feld hindurchtritt, wobei das elektromagnetische Feld in der Schleife einen elektrischen Strom induziert. An den beiden Enden der Schleife ist das Anzeigeelement mit jeweils einem seiner Anschlusskontakte über Anschlussflächen der Antennenleiterbahn elektrisch verbunden. Vorzugsweise weist die Antennenleiterbahn mehrere Windungen auf, wobei die einzelnen Windungen vorzugsweise parallel zueinander verlaufen, sodass die Leiterbahn bevorzugt spiralförmig ausgebildet ist. Auch in diesem Falle weist die Antennenleiterbahn zwei Enden in Form von Anschlussflächen auf, über die diese mit den Anschlusskontakten des Anzeigeelements elektrisch verbunden sind. Die Anschlussflächen der Antennenleiterbahn befinden sich bevorzugt in geringstmöglichem Abstand voneinander, um das Anzeigeelement in einfacher Weise mit diesen verbinden zu können. Das Anzeigeelement kann im Bereich der Anschlussflächen eine Brücke über den Leiterbahnstrang bilden, der durch die einzelnen Windungen der Antennenleiterbahn gebildet wird. Alternativ kann auch eine äußere oder innere Windung diesen Strang kreuzen, ohne allerdings mit den anderen Windungen in Kontakt zu kommen, sodass beide Anschlussflächen auf derselben Seite des Stranges, d.h. innerhalb oder außerhalb der von den Windungen umschlossenen Fläche, liegen. Dann kann das Anzeigeelement auf dieser Seite der Antennenleiterbahn platziert und mit deren Anschlussflächen elektrisch verbunden sein.

In einer besonders bevorzugten Ausführungsform der vorliegenden Erfindung ist das mindestens eine Anzeigeelement eine LED (light emitting diode) oder eine OLED (organic light emitting diode) oder eine Light emitting electrochemical Cell (LEC) oder ein Bauelement auf Basis der Field induced polymer electroluminescence (FIPEL). Alternativ können grundsätzlich auch Flüssigkristallanzeigen verwendet werden, wenn diese mit einer für den Betrieb der Anzeige vorgesehenen elektronischen Schaltung versehen sind, damit das Anzeigeelement eine für die Bildung des Anzeigeschaltkreises erforderliche elektrische Kapazität aufweist.

Gemäß der vorliegenden Erfindung bildet der Anzeigeschaltkreis bevorzugt einen Schwingkreis, dessen Impedanz auf das elektromagnetische Feld abgestimmt ist. Die Anzeigeschaltkreis-Impedanz wird insbesondere durch die Eigenschaften der mindestens einen Antennenleiterbahn und die Eigenschaften des mindestens einen Anzeigeelements bestimmt. Die Eigenschaften der Antennenleiterbahn sind insbesondere durch deren Induktivität bestimmt, die wiederum unter anderem durch die von der mindestens einen Antennenleiterbahn umschlossene Fläche, deren Form, ferner deren Windungsanzahl, den elektrischen Widerstand der Antennenleiterbahn, d.h. das Material, aus dem die Antennenleiterbahn gebildet ist, den Querschnitt der Antennenleiterbahn, d.h. deren Breite und Höhe, den Abstand der Windungen voneinander und gegebenenfalls weitere Parameter bestimmt ist. Die Eigenschaften des Anzeigeelements sind insbesondere durch dessen elektrische Kapazität bestimmt, die unter anderem von der Art des Anzeigeelements abhängt. Typischerweise wird für die Datennahfeldübertragung nach ISO/IEC 18000, 14443, 15693 eine Frequenz von 13,56 MHz verwendet. Damit ein elektromagnetisches Feld dieser Frequenz von dem Anzeigeschaltkreis detektiert werden kann, sind die Parameter der den Schaltkreis bildenden Komponenten auf diese Frequenz anzupassen.

Das erfindungsgemäße Anzeigemodul weist zusätzlich zu der mindestens einen Antennenleiterbahn und dem mindestens einen Anzeigeelement einen diese Komponenten tragenden Anzeigeträger auf. Das Anzeigemodul kann in einen Dokumentenrohling eingesetzt werden, um das erfindungsgemäße Wert- oder Sicherheitsdokument zu bilden. Hierzu werden das Anzeigemodul und der Dokumentenrohling separat voneinander hergestellt und das Anzeigemodul in eine Kavität im Dokumentenrohling eingesetzt. Die Kavität kann beispielsweise durch Ausfräsen oder Ausstanzen im Dokumentenrohling gebildet werden, oder sie wird beim Herstellprozess des Dokumentenrohlings gebildet. Ganz besonders bevorzugt kann das Anzeigemodul auch durch eine Polymerlage gebildet sein, die den Anzeigeträger darstellt und die dieselbe Größe wie weitere Polymerlagen in dem Wert- oder Sicherheitsdokument aufweist und mit diesen beispielsweise zu dem Dokument laminierbar ist. Auf dieser den Anzeigeträger bildenden Polymerlage befindet sich der Anzeigeschaltkreis, der durch die mindestens eine Antennenleiterbahn und das mindestens eine Anzeigeelement gebildet ist. Falls das Anzeigemodul also genauso groß ist wie die das Wert- oder Sicherheitsdokument bildenden Polymerlagen, kann es in den Folienstapel eingelegt, fixiert und laminiert werden (in diesem Fall ohne Ausschnitt). Falls das Anzeigemodul dagegen kleiner ist als die das Wert- oder Sicherheitsdokument bildenden Polymerlagen, wird in einer Folienlage ein Ausschnitt in der Größe des Anzeigemoduls erstellt.

Dabei entspricht die Dicke der Folienlage bevorzugt der Dicke des Anzeigemoduls oder des Anzeigeträgers.

Gemäß der vorliegenden Erfindung weist der Rand/Umriss des Anzeigemoduls eine eine Information codierende Gestaltung aufweisen. Zusätzlich kann auch die mindestens eine Antennenleiterbahn, d.h. können beide jeweils Gestaltungen aufweisen, die eine oder mehrere Informationen codieren. Eine bestimmte Codierung kann entweder für alle Dokumente einer bestimmten Art, etwa alle Kreditkarten eines bestimmten Karten ausgebenden Unternehmens zu deren Unterscheidung voneinander, oder für Teilmengen dieser Dokumente, beispielsweise zur Unterscheidung dieser Kreditkarten nach bestimmten damit verbundenen Serviceleistungen, verwendet werden. Alternativ kann die Codierung auch individuell für jedes einzelne Dokument oder individuell für alle Dokumente eines bestimmten Benutzers, dem die Dokumente zugeordnet sind, oder nach noch anderen Individualisierungskriterien, d.h. individualisiert, insbesondere personalisiert, ausgebildet sein.

Die Form der Antennenleiterbahn ist vorzugsweise nicht individualisiert ausgebildet, da diese auch hinsichtlich ihrer Gestaltung der zusätzlichen Anforderung genügen muss, zusammen mit dem mindestens Anzeigeelement einen Schwingkreis zu bilden, dessen Impedanz so eingestellt ist, dass das elektromagnetische Feld in diesen Schwingkreis möglichst effizient kontaktlos eingekoppelt werden kann, um das Feld zu detektieren. Andererseits ist eine Anpassung der Gestaltung nach bestimmten Kriterien, beispielsweise nach der ausgebenden Stelle des Dokuments, auch nicht ausgeschlossen. Beispielsweise kann die Antenne die Form eines Logos, Codes, Wappens, einer Marke oder einer anderen individuellen Gestaltung aufweisen.

Die Form des Randes/Umrisses des Anzeigemoduls kann in beliebiger Art und Weise gestaltet sein, sodass durch die Form eine bestimmte Information codiert wird. Diese Codierung kann im Falle eines typischerweise im Wesentlichen rechteckigen Anzeigemoduls beispielsweise durch an einer, zwei, drei oder an allen vier Seiten des Rechteckes angeordnete vorspringende Finger gebildet sein, deren Anzahl, Anordnung, Breite und/oder Abstände voneinander wie im Falle eines Streifenbarcodes eine Information codieren. Alternativ kann der Rand/Umriss des Anzeigemoduls auch in regelmäßig wiederkehrenden Mustern, beispielsweise in Form eines Sägezahn-, Wellenlinien-, Sinus- oder Rechteckprofils, ausgebildet sein, die wiederum auch untereinander abwechseln oder durch glatte (gerade) Randbereiche unterbrochen sein können. Eine Variante der letztgenannten Möglichkeit besteht darin, dass bestimmte Abschnitte einzelner oder aller Ränder entweder glatt oder in einer der vorstehenden oder noch anderen Profilarten ausgebildet sind und mehrere derartige Abschnitte unmittelbar aneinander angrenzen.

In einer weiteren bevorzugten Ausführungsform der vorliegenden Erfindung weist das erfindungsgemäße Anzeigemodul eine lokal variierende Transmission für elektromagnetische Strahlung auf (bei Durchlichtbetrachtung), die ein eine Information codierendes Muster ergibt (sekundäres Sicherheitsmerkmal). Die ortsabhängig variierende Transmission kann für einen Beobachter entweder visuell wahrnehmbar sein, indem die Ortsabhängigkeit der Transmission des Anzeigemoduls für elektromagnetische Strahlung im sichtbaren Spektralbereich besteht, oder nicht für einen Beobachter visuell wahrnehmbar sein, wenn die Transmission nur in einem anderen als dem sichtbaren Spektralbereich, beispielsweise im UV- oder IR-Spektralbereich, ortsabhängig variiert. Im Unterschied zu der Gestaltung der Form des Randes/Umrisses des Anzeigemoduls ist das Anzeigemodul in dieser Ausführungsform innerhalb des durch den Rand/Umriss begrenzten Bereiches in einer geeigneten Art und Weise strukturiert, sodass dessen Transmission ortsabhängig variiert. Hierzu kann in einer ersten bevorzugten Ausführungsvariante die Dicke des Moduls ortsabhängig variieren und/oder in einer zweiten Ausführungsvariante sich mindestens eine Schicht auf dem Anzeigeträger befinden, deren Vorhandensein und/oder Dicke und/oder optische Dichte ortsabhängig variiert/variieren.

Grundsätzlich kann entweder der Anzeigeträger des Anzeigemoduls eine ortsabhängig variierende Transmission aufweisen, oder auf dem Anzeigemodul ist mindestens eine Schicht angeordnet, die selbst eine ortsabhängige Transmission aufweist. Selbstverständlich sind auch Ausführungsformen denkbar, bei denen sowohl die Transmission des Anzeigeträgers als auch diejenige der darauf angeordneten mindestens einen Schicht variieren. Alternativ können sich ebenso wie die Antennenleiterbahn noch andere Komponenten auf dem Anzeigeträger befinden, die eine ortsabhängige Transmission des Anzeigemoduls erzeugen.

Eine ortsabhängige Transmission des Anzeigeträgers kann ferner beispielsweise durch eine Variation der optischen Dichte des Anzeigeträgermaterials erreicht werden, insbesondere durch gezielte Einlagerung bestimmter Materialien in den Anzeigeträger, die eine höhere oder geringere optische Dichte als das umgebende Material, in das sie eingebettet sind, haben, wie von innenliegenden Metallstrukturen, etwa entsprechend den innenliegenden Leiterbahnen in Leiterplatten, oder durch lokale Abdünnung des Anzeigeträgermaterials, entweder nur teilweise oder vollständig, wobei in letzterem Falle Durchbrechungen, beispielsweise Ausstanzungen, des Anzeigeträgers gebildet werden oder durch lokale Verdickung des Anzeigeträgers. Falls die ortsabhängige Transmission durch andere Komponenten des Anzeigemoduls als des Anzeigeträgers selbst hervorgerufen werden, kann es sich beispielsweise um eine Schicht handeln, die zusätzlich zu der Antennenleiterbahn und dem Anzeigeelement auf den Anzeigeträger aufgebracht ist und die eine ortsabhängige optische Dichte (im sichtbaren und/oder UV- und/oder IR-Spektralbereich) aufweist. Die ortsabhängige optische Dichte kann durch eine unterschiedliche Dicke dieser Schicht oder dadurch erzeugt werden, dass sich die Schicht nur in bestimmten Bereichen auf dem Anzeigeträger befindet, in anderen jedoch nicht. Beispielsweise kann eine Lötstoppmaske eine derartige Schicht bilden, da ein derartiges Material leicht strukturierbar ist, beispielsweise mittels eines Photostrukturierungsverfahrens.

Somit bildet das Anzeigemodul in dieser weiteren Ausführungsform der vorliegenden Erfindung ein einem Wasserzeichen entsprechendes Sicherheitsmerkmal. Das Muster dieses Wasserzeichens kann wiederum als Echtheitsmerkmal oder als ein eine differenzierte Information codierendes Merkmal ausgebildet sein, also beispielsweise in Form eines Logos, Codes, eines Wappens, einer Marke oder dergleichen oder in Form eines Barcodes, beispielsweise eines 2D-Barcodes, wie eines QR-Codes, oder dergleichen. Das Wasserzeichen kann visuell wahrnehmbar und/oder maschinell auslesbar sein.

Falls beispielsweise die mindestens eine Antennenleiterbahn selbst eine lokal variierende optische Dichte hervorruft, variiert die Transmission in den von der mindestens einen Antennenleiterbahn bedeckten Bereichen des Anzeigemoduls ortsabhängig. Hierzu müsste beispielsweise die Dicke der Antennenleiterbahn ortsabhängig variieren. Falls andere Komponenten des Anzeigemoduls als die Antennenleiterbahn in Bereichen außerhalb der Antennenleiterbahn eine lokal variierende Transmission hervorrufen, variiert die Transmission in den nicht von der mindestens einen Antennenleiterbahn bedeckten Bereichen des Anzeigemoduls ortsabhängig. Selbstverständlich können auch Mischformen vorkommen, bei denen die Transmission sowohl in den von der Antennenleiterbahn bedeckten als auch in den von der Antennenleiterbahn nicht bedeckten Bereichen lokal variiert.

Die vorstehend genannten Formgestaltungen der Antennenleiterbahn und des Randes/Umrisses des Anzeigemoduls sowie der ortsabhängigen Transmission des Anzeigemoduls können in einer weiteren bevorzugten Ausführungsform der vorliegenden Erfindung mit dem bloßen Auge, d.h. visuell und damit praktisch ohne Hilfsmittel, erkennbar sein, wenn das Material des Dokuments, vom Auge des Betrachters aus betrachtet, oberhalb und/oder unterhalb des Anzeigemoduls transparent oder transluzent ist. Transluzenz in diesem Sinne ist dann gegeben, wenn die innenliegenden Strukturen, also die Form der Antennenleiterbahn und/oder des Randes/Umrisses des Anzeigemoduls und/oder der ortsabhängigen Transmission des Anzeigemoduls, zumindest unter Anwendung einer Beleuchtung auf der dem Betrachterauge abgewandten Seite des Dokuments visuell erkennbar und gegebenenfalls auswertbar sind. Transluzenz ist nicht nur dann gegeben, wenn das Material beispielsweise stark streut, aber ansonsten im sichtbaren Spektralbereich im Wesentlichen nicht absorbiert. Zum Zwecke der vorliegenden Erfindung ist es auch ausreichend, dass das Material elektromagnetische Strahlung in dem relevanten Spektralbereich zwar absorbiert, das Material die elektromagnetische Strahlung aber in ausreichendem Umfange hindurchtreten lässt, sodass die genannten Sicherheitsmerkmale von einem Betrachter erkannt und gegebenenfalls ausgewertet werden können. Beispielsweise kann dieses Material weiß oder auch zumindest schwach grau oder farbig eingefärbt sein, sodass die innenliegenden Strukturen noch mittels einer starken Lichtquelle wahrnehmbar gemacht werden können. Entsprechendes gilt auch für elektromagnetische Strahlung außerhalb des sichtbaren Spektralbereiches, also beispielsweise im UV- oder IR-Spektralbereich, wenn das durch diese Strukturen gebildete Sicherheitsmerkmal nicht visuell sondern mittels einer auf Strahlung in diesen Spektralbereichen ansprechenden Detektionsvorrichtung ausgewertet werden soll.

Gemäß einer weiteren bevorzugten Ausführungsform der vorliegenden Erfindung sind die vorgenannten Gestaltungen der Form des Randes/Umrisses des Anzeigemoduls und gegebenenfalls zusätzlich der mindestens einen Antennenleiterbahn gegebenenfalls nicht oder nicht nur auf optischem Wege detektierbar/wahrnehmbar sondern bilden auch jeweils Vertiefungen und/oder Erhebungen an der Oberfläche des Dokuments, auch wenn sich das Anzeigemodul in dem Wert- oder Sicherheitsdokument eingebettet befindet, sodass sich diese Strukturen an der Oberfläche abzeichnen. Dies ist im Falle der mindestens einen Antennenleiterbahn darauf zurückzuführen, dass sich diese aufgrund ihrer Dicke über die Oberfläche des Anzeigeträgers erhebt und eine entsprechende Erhebung an der Oberfläche des Wert- oder Sicherheitsdokuments bildet. Im Falle des Randes/Umrisses des Anzeigemoduls entstehen beim Einbetten des Moduls in den Dokumentenrohling schmale Fugen, die durch minimale Abweichungen der äußeren Abmessungen und/oder der Form des Anzeigemoduls von den inneren Abmessungen und/oder der Form der Kavität entstehen, in die das Anzeigemodul eingesetzt ist, und die sich ebenfalls an der Oberfläche des Dokuments abzeichnen, in diesem Falle in Form von Vertiefungen. Damit diese dreidimensionalen Strukturen in Form einer Hoch- bzw. Tiefprägung an der Oberfläche des Dokuments gebildet werden, wird eine vorzugsweise nur sehr dünne äußere Dokumentenlage oder ein Schutzlack auf der Seite auf das Dokument aufgebracht, an der das Anzeigemodul in den Rohling integriert ist, wobei die Dicke dieser Lage vorzugsweise maximal ungefähr der Dicke der Antennenleiterbahn und/oder der Breite der Fugen zwischen dem Anzeigemodul und dem umgebenden Material des Dokumentenrohlings beträgt (vorzugsweise maximal 150 % dieser Antennenleiterbahndicke bzw. Fugenbreite). Als äußere Dokumentenlage kann in einer besonders bevorzugten Ausführungsform ein Schutzlack oder eine sehr dünne Polymerlage gewählt werden. Der Schutzlack dringt in diese Fugen ein und bildet damit die Vertiefungen möglichst exakt ab. Der Lack schmiegt sich möglichst exakt an die Form der Antennenleiterbahn an.

Zur Detektion der Sicherheitsmerkmale des Anzeigemoduls gemäß der vorliegenden Erfindung kann ein Betrachter die sichtbaren Merkmale unmittelbar (visuell, d.h. mit dem Auge) wahrnehmen, gegebenenfalls unter zusätzlicher Verwendung einer starken Lichtquelle zur Erkennung der örtlich variierenden Transmission des Anzeigemoduls, und außerdem eventuell vorhandene dreidimensionale Strukturen an der Oberfläche des Dokuments durch Ertasten wahrnehmen. Für den Fall, dass die dreidimensionalen Strukturen an der Oberfläche des Dokuments für ein Ertasten nicht die erforderliche Höhe aufweisen, beispielsweise mindestens 30 µm, können diese auch unmittelbar optisch erkennbar sein, beispielsweise durch Betrachtung bei reflektierender Beleuchtung. Falls die durch die Sicherheitsmerkmale vorgesehenen Muster mit einem vorgegebenen Aussehen vorhanden sind, verläuft dieser Verifikationsprozess erfolgreich (Level 1-Sicherheitsmerkmal). Zusätzlich oder alternativ hierzu können die Sicherheitsmerkmale auch derart ausgebildet sein, dass sie nicht visuell sondern ausschließlich in einem anderen als dem sichtbaren Spektralbereich (UV-, IR-Spektralbereich) ermittelbar sind. In diesem Falle wird eine Verifikationsvorrichtung verwendet, mit der die Sicherheitsmerkmale in diesem anderen Spektralbereich erfassbar sind. Diese Vorrichtung weist für elektromagnetische Strahlung in diesem Spektralbereich empfindliche Sensoren, die beispielsweise dazu ausgebildet sind, Musterstrukturen aufzunehmen, sowie eine Auswerte- und Speicher- sowie eine Wiedergabeeinheit auf, die die erfassten Muster darstellt. Übliche weitere Komponenten derartiger Vorrichtungen sind allgemein bekannt.

Zur Herstellung des erfindungsgemäßen Anzeigemoduls kann wie folgt vorgegangen werden: Vorzugsweise wird zunächst die Antennenleiterbahn auf einem Anzeigeträger erzeugt. Anschließend kann das Anzeigeelement auf dem Anzeigeträger befestigt werden, wobei das Anzeigeelement mit der Antennenleiterbahn elektrisch verbunden wird, indem die Anschlusskontakte des Anzeigeelements mit den Anschlussflächen der Antennenleiterbahn entweder direkt oder über Zuleitungen elektrisch verbunden werden.

Der Anzeigeträger kann beispielsweise durch eine Polymerlage gebildet sein, die mit Füllstoffen oder einem Verstärkungsmaterial gefüllt sein kann oder auch ungefüllt sein kann. Die Polymerlage kann aus einem der Materialien gebildet sein, die auch für die Herstellung des Wert- oder Sicherheitsdokuments zur Verfügung stehen. Insofern wird auf die diesbezüglichen vorstehenden Erläuterungen verwiesen. Es kann vorzugsweise aus demselben Material gebildet sein wie das Dokument. Falls der Anzeigeträger eine Rand/Umriss-Strukturierung als primäres Sicherheitsmerkmal aufweist, wird der Anzeigeträger beispielsweise mit einem Stanz- oder Fräsverfahren in die gewünschte Form gebracht. Falls der derart strukturierte Anzeigeträger in eine Kavität einer Polymerlage eingesetzt werden soll, kann diese Kavität mit einem Stanz-, Schneidplott- oder Laserschneidverfahren hergestellt werden.

Die mindestens eine Antennenleiterbahn kann in einer besonders bevorzugten Ausführungsform der vorliegenden Erfindung mittels einer Leitpaste oder Leitfarbe auf den Anzeigeträger gedruckt werden. Vorzugsweise ist die Antennenleiterbahn als Druckschicht mit elektrisch leitenden Pigmentpartikeln ausgebildet. Entsprechendes gilt für elektrische Zuleitungen zu dem Anzeigeelement, wobei diese auch durch feine Drähte gebildet werden können, wenn das Anzeigeelement mittels Drahtbonden mit den Anschlussflächen elektrisch kontaktiert wird. Die Antennenleiterbahn bzw. die elektrischen Zuleitungen können mittels üblicher Drucktechniken auf den Anzeigeträger des Anzeigemoduls aufgebracht werden. Die Dicke der aufgedruckten Paste oder des Lacks kann insbesondere 1 µm bis 100 µm und besonders bevorzugt etwa 10 µm betragen. Die Leitpaste oder der Leitlack kann entweder einfach getrocknet werden oder mittels Wärme und/oder Bestrahlung mit elektromagnetischer Strahlung, beispielsweise UV-Strahlung, aushärtbar sein. Die Leitpaste oder Leitfarbe enthält mindestens ein Polymer als Binder sowie mindestens ein Metall und/oder ein leitfähiges Metalloxid und/oder anderes leitfähiges Material in dem Polymer. Als leitfähiges Material kommen Kupfer, Silber, Gold, Eisen, Zink, Zinn oder Kohlenstoff, insbesondere Graphit, Singlewall- und/oder Multiwall-Nanotubes, Fullerene oder Graphene in Betracht. Als Metalloxide kommen ITO (Indium-Zinn-Oxid), IZO, FTO (Fluor-dotiertes Zinndioxid), ATO (Antimonoxid) in Betracht, Die Metalle/Metalloxide können in Form von Flakes, Nadeln, Pulver (insbesondere nanoskalig), Plättchen oder dergleichen vorliegen. Insbesondere liegen diese als aggregierte Partikel vor. Als andere leitfähige Materialien kommen leitfähige organische Materialien/Polymere, z.B. Polyanilin, PEDOT:PSS, in Betracht. Beispiele für geeignete Materialien zum Herstellen der Antennenleiterbahn sind Produkte der Firma NanoChemonics, NM, USA. Weitere Beispiele geeigneter Tinten bzw. Beschichtungsmittel sind die Produkte IJAg-150-Fx oder AG-IJ-G-100-51 (Silberbasis mit Partikeldurchmesser zwischen 30 und 50 nm), welche mittels Tintenstrahldruck aufbringbar sind. Diese Beschichtungsmittel zeichnen sich zudem dadurch aus, dass eine Leitschicht erst durch einen Aktivierungsschritt, z.B. Laserbestrahlung mit 500 bis 580 nm, im Wege der Sinterung der Partikel entsteht. Die an sich nicht leitfähige Schicht wird mit der Bestrahlung hoch leitfähig. Schließlich sind Siebdruckfarben mit leitfähigen Partikeln der Firmen Dupont (5028 oder 5029) und Spraylat einsetzbar, welche durch Wärmeeinwirkung ihre Leitfähigkeit erhöhen, insbesondere vervielfachen.

Alternativ kann die Antennenleiterbahn auch in einer anderen Technik hergestellt sein, beispielweise in einer Ätztechnik aus Aluminium oder Kupfer mittels eines Ätzresists oder in einem Pattern-Plating-Verfahren. Bei Pattern-Plating-Verfahren werden, ausgehend von einer Grundmetallisierung, beispielsweise aus Kupfer, mit einem Platingresist auf der Grundmetallisierung zunächst die Strukturen als Kanäle geformt. Dann wird zusätzliches Metall in den Kanälen galvanotechnisch abgeschieden. Nach dem Entfernen des Platingresists wird die Grundmetallisierung zwischen den Strukturen durch Ätzen oder mittels Laser direct imaging (LDI) oder Laserablation oder Fräsen entfernt. Als Substratmaterialien kommen unter anderem FR4, Polyimid und PC in Betracht.

Das Anzeigeelement wird dann auf dem Anzeigeträger befestigt und dabei oder danach mit der Antennenleiterbahn elektrisch verbunden. Eine Möglichkeit der Befestigung und elektrischen Verbindung besteht darin, dass das Anzeigeelement in der sogenannten Flip-Chip-Technik, d.h. über Kopf mit dessen Anschlusskontakten nach unten, auf die Anschlussflächen der Antennenleiterbahn aufgesetzt wird, wobei ein Leitkleber zwischen dem Träger bzw. der Antennenleiterbahn und dem Anzeigeelement verwendet wird, um die Verbindungen herzustellen. Alternativ kann das Anzeigeelement auch neben den Anschlussflächen der Antennenleiterbahn auf den Anzeigeträger aufgesetzt und mittels eines Klebers dort befestigt werden. Zur elektrischen Verbindung der Anschlussflächen der Antennenleiterbahn mit den Anschlusskontakten des Anzeigeelements kann beispielsweise die Drahtbondtechnik eingesetzt werden, bei der dünne Drähte zuerst beispielsweise auf den Anschlusskontakten des Anzeigeelements befestigt, dann zu den Anschlussflächen der Antennenleiterbahn geführt und schließlich dort befestigt werden. Dabei wird jeweils ein elektrischer Kontakt hergestellt. Die vorstehend angegebenen Verfahren und die hierbei verwendeten Materialien sind dem Fachmann bekannt.

Das erfindungsgemäße Wert- oder Sicherheitsdokument ist, wie oben angegeben, durch einen Dokumentenkörper aus einer oder mehreren Lagen aus thermoplastisch verarbeitbaren Kunststoffen gebildet, wobei die oben angegebenen Polymere die thermoplastisch verarbeitbaren Kunststoffe sind. Zum Einbetten des Anzeigemoduls in einen Dokumentenrohling kann das Modul zunächst in eine Kavität in einer zentralen Polymerlage oder in einem Stapel mehrerer zentraler Polymerlagen eingesetzt werden. Die Kavität in den zentralen Polymerlagen kann beispielsweise durch Ausstanzen gebildet werden. Alternativ kann der Anzeigeträger selbst durch eine Polymerlage gebildet sein, die dieselbe Größe wie die weiteren Polymerlagen für das Dokument aufweist. Dieses Ensemble wird dann mit weiteren äußeren Polymerlagen, die die zentralen Polymerlagen und das Anzeigemodul an der Oberseite und an der Unterseite abschließen, kollationiert. Abschließend wird der Stapel durch Laminieren zu einem monolithischen Block verbunden. Hierzu kann ein Wert- oder Sicherheitsdokument in einer Heiz-Kühl-Presse bei einer Temperatur bis zu etwa 200 °C und bei einem Druck von etwa 300 bis 500 N/cm² im Heizpresszyklus und etwa 500 bis 700 N/cm² im Kaltpresszyklus hergestellt werden. Diese Werte gelten für Dokumente aus Polycarbonat. Für andere Materialien werden angepasste Temperaturen eingesetzt. Auf die sich an der Oberseite (der Seite, auf der sich die Antennenleiterbahn befindet) befindende äußere Polymerlage kann in einer alternativen Ausführungsform auch verzichtet werden. In diesem Falle wird der laminierte Dokumentenrohling dann mit einem Schutzlack auf der Oberseite versehen.

In einer weiteren bevorzugten Ausführungsform der vorliegenden Erfindung ist das mindestens eine Anzeigeelement dazu ausgebildet, dass es ein optisches und/oder akustisches und/oder mechanisches Signal abgibt. Somit handelt es sich um ein Leuchtelement und/oder um einen akustischen Signalgeber und/oder um einen Vibrationsgeber oder anderen mechanischen Geber. Derartige Anzeigeelemente sind dem Fachmann bekannt. Akustische und Vibrationsgeber sind im Allgemeinen mit einem piezoelektrischen Aktuator ausgestattet, um die akustischen und/oder mechanischen Signale zu erzeugen.

Das erfindungsgemäße Wert- oder Sicherheitsdokument weist zusätzlich zu dem erfindungsgemäßen Anzeigemodul vorzugsweise auch eine Transponderschaltung auf, die mindestens eine Transponderantenne und mindestens einen RFID-Halbleiterchip (Sicherheits-Chip) aufweist. Diese Komponenten werden von einem Transponderträger getragen, wobei die Gesamtheit dieser Elemente einen Transponder als in einen Dokumentenrohling integrierbares Transpondermodul (Transponder-Inlet) bildet. Der Anzeigeschaltkreis ist von dem Transponderschaltkreis vorzugsweise elektrisch getrennt, um sicherzustellen, dass der Datenaustausch, insbesondere die Datenaustauschgeschwindigkeit, zwischen dem Reader und dem Transponderschaltkreis nicht beeinträchtigt wird. Die Transponderantenne ist ebenso wie die Antennenleiterbahn des Anzeigemoduls durch vorzugsweise mehrere Antennenwindungen gebildet, die, besonders bevorzugt, spiralförmig ausgebildet sind. An den Enden der Transponderantenne befinden sich wie im Falle des Anzeigemoduls Anschlussflächen, die mit den Anschlusskontakten des RFID-Halbleiterchips elektrisch verbunden sind, wobei der Chip auf dem Transponderträger befestigt ist. Die Transponderantenne kann ebenso wie die Antennenleiterbahn des Anzeigemoduls beispielsweise mittels eines Druckverfahrens mit einer Leitpaste oder einem Leitlack gebildet werden. Insofern wird auf die diesbezüglichen Erläuterungen zur Herstellung der Antennenleiterbahn verwiesen. Der RFID-Halbleiterchip kann durch einen ungehäusten Halbleiterchip (bare die) gebildet sein. Alternativ kann das Bauelement aber auch ein gehäustes Bauelement sein, beispielsweise ein Surface Mount Device (SMD) oder ein Chip Scale Package (CSP), oder in einer der folgenden Gehäuseformen: DIP, TQFP, MLF, SOTP, SOT, PLCC, QFN, SSOT, BGA, MOB, oder anderen üblichen Gehäuseformen vorliegen. Des Weiteren können auch Submodule als Chipträger, basierend auf flexiblen Leiterplatten (Interposa) aus Polyimid, FR4, PC, dünnem Glas, verwendet werden. Der RFID-Halbleiterchip weist mindestens zwei Anschlusskontakte auf, die an der Kontaktierungsseite des Chips angeordnet sind und vorzugsweise mit den an einander gegenüber liegenden Seiten des Antennenleiterbahnstranges angeordneten Anschlussflächen der Antennenleiterbahn kontaktiert sind. In diesem Falle überbrückt der RFID-Halbleiterchip den Strang aus den Windungen der Transponderantenne. Alternativ kann der Chip auch innerhalb oder außerhalb der durch die Transponderantenne umschlossenen Fläche angeordnet sein. Hierzu kreuzt eine äußere bzw. innere Windung den Strang, ohne mit diesem in elektrischen Kontakt zu kommen.

In einer weiteren möglichen Ausführungsform der vorliegenden Erfindung befindet sich der Anzeigeschaltkreis in derselben Ebene wie der Transponderschaltkreis, und in einer anderen Ausführungsform befinden sich beide in unterschiedlichen Ebenen. Im ersteren Falle kann das Anzeigemodul in eine Kavität in dem Transponderträger eingesetzt werden, sodass sich die Antennenleiterbahn des Anzeigemoduls innerhalb der Transponderantenne oder vorzugsweise neben der Transponderantenne befindet, sodass beide unterschiedliche Flächen im Dokument einnehmen. Falls sich beide Schaltkreise in unterschiedlichen Ebenen befinden, kann das Anzeigemodul in eine Kavität in einer von dem Transponderträger verschiedene Polymerlage eingesetzt werden. Nochmals alternativ kann das Anzeigemodul auch als Bestandteil des Transponders auf dem Transponderträger gebildet werden, indem der durch die Antennenleiterbahn und das Anzeigeelement gebildete Anzeigeschaltkreis zusätzlich zu dem Transponderschaltkreis auf dem Transponderträger erzeugt wird. Um eine besonders kostengünstige Herstellung des Dokuments zu erreichen, können beide Schaltkreise in derselben Ebene angeordnet sein. Um den Vorteil einer eine Information codierenden Form des Randes/Umrisses des Anzeigeelements zu nutzen, wird das Anzeigemodul mit einem separaten Träger hergestellt. Hierfür können dieselben Materialien für den Anzeigeträger verwendet werden wie vorstehend für den Transponderträger angegeben ist.

Bei einer Benutzung des erfindungsgemäßen Wert- oder Sicherheitsdokuments mit dem erfindungsgemäßen Anzeigemodul bei gleichzeitigem kontaktlosem Datenaustausch zwischen einem Reader, beispielsweise einem ISO/IEC14443-Lesegerät, Verifikationsgerät, einer Zutrittskontrollanlage, einem Kassenterminal, einem NFC (near field communication)-fähigen Mobiltelefon, einer einfachen Wechselfelderzeugungsquelle ohne Lesefunktion oder dergleichen, und einem Transponderschaltkreis wird beispielsweise durch eine Modulation des elektromagnetischen Feldes durch den Reader bestimmt, wann das Anzeigeelement ein Signal ausgibt, also beispielsweise eine LED leuchtet, und wann nicht. Dieses Signal wird dann entweder von einem Betrachter visuell erkannt, oder das Signal wird von einem weiteren Gerät, beispielsweise einem Verifikationsgerät oder Smartphone erfasst, wobei die Modulation so gestaltet sein kann, dass der Schreib-/Leseprozess angezeigt wird. Beispielsweise kann auch das Beenden des Schreib-/Leseprozesses angezeigt werden. Hierzu ist ein den Reader ansteuerndes Terminal so zu programmieren, dass es nach dem Erhalt des entsprechenden Signals "Lesen beendet" des RFID-Chips das Reader-Feld so moduliert, dass eine entsprechende Signalabfolge im Anzeigeelement erkennbar oder detektierbar wird.

Zur exemplarischen Erläuterung der vorliegenden Erfindung dienen die nachfolgend beschriebenen Figuren, die aufgrund ihres beispielhaften Charakters jedoch nicht schutzbeschränkend sind. Es zeigen im Einzelnen:
- Fig. 1: eine Identitätskarte in einer schematischen isometrischen Ansicht;
- Fig. 2: eine zentrale Polymerlage mit einem Transponderschaltkreis und einem darin eingesetzten Anzeigemodul in einer schematischen Draufsicht;
- Fig. 3: eine zentrale Polymerlage mit einem Transponderschaltkreis und einem darin eingesetzten Anzeigemodul in einer ersten Ausführungsform von Sicherheitsmerkmalen in einer schematischen Draufsicht;
- Fig. 4: ein Anzeigemodul in einer zweiten Ausführungsform von Sicherheitsmerkmalen gemäß der vorliegenden Erfindung in einer schematischen Draufsicht;
- Fig. 5: das Anzeigemodul von Fig. 4 in einer schematischen Querschnitts-Teilansicht;
- Fig. 6: ein Anzeigemodul in einer dritten Ausführungsform von Sicherheitsmerkmalen gemäß der vorliegenden Erfindung in einer schematischen Querschnitts-Teilansicht;
- Fig. 7: ein Ersatzschaltbild eines Anzeigeschaltkreises;
- Fig. 8: eine Explosionsdarstellung mehrerer zu einer Identitätskarte zu verbindender Polymerlagen mit einem Transponderschaltkreis und einem Anzeigemodul in einer schematischen isometrischen Ansicht;
- Fig. 9: eine Anordnung eines Readers, einer damit kommunizierenden Identitätskarte und eines mit dieser kommunizierenden Smartphones in einer schematischen Ansicht.

In den Figuren bezeichnen identische Bezugszeichen Elemente mit derselben Funktion und/oder dieselben Elemente.

Das erfindungsgemäße Wert- oder Sicherheitsdokument 100 kann ein Personaldokument, wie ein Reisepass, ein Personalausweis, ein Zugangsausweis oder dergleichen, eine Scheckkarte oder eine Banknote oder noch ein anderes Dokument, sein. Alle nachfolgenden Beispiele werden stellvertretend für andere Dokumententypen anhand einer Identitätskarte 100 beschrieben.

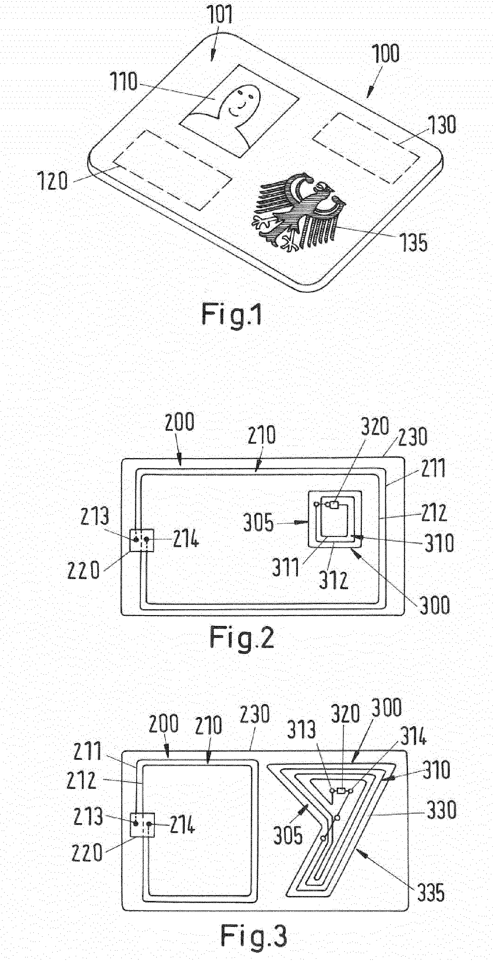

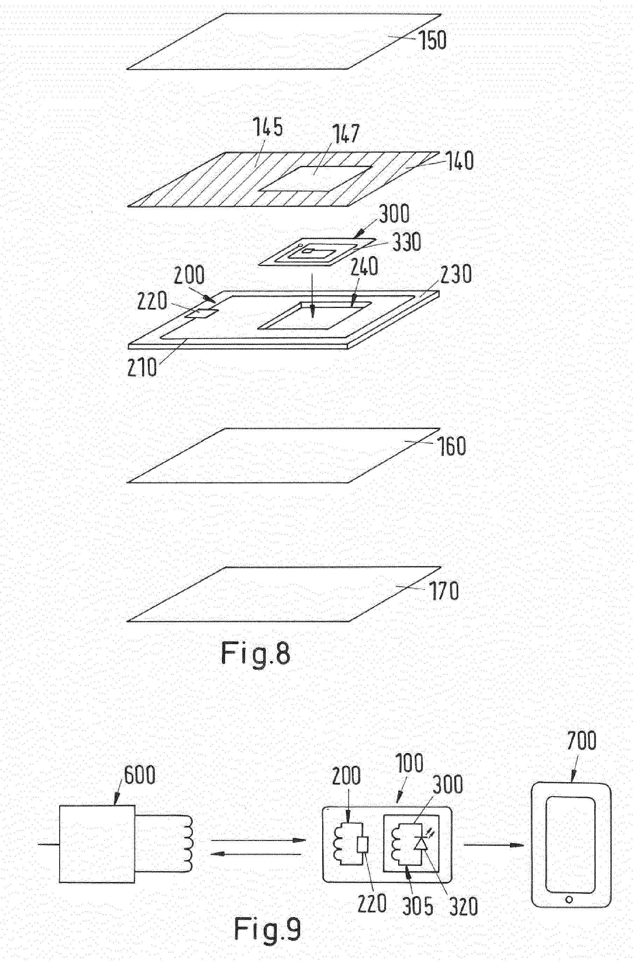

In Fig. 1 ist stellvertretend für andere derartige Produkte eine Identitätskarte 100 dargestellt, die beispielsweise als Laminat aus mehreren Polymerlagen zusammengefügt worden ist (siehe Fig. 8). Beispielsweise können die Polymerlagen aus PC und/oder PET bestehen. Die einzelnen Lagen 140, 160, 230 können ungefüllt oder mit Füllstoffen gefüllt sein. Die Lagen können vorzugsweise derart miteinander verbunden sein, dass sie einen monolithischen Block bilden, der nur schwierig gespalten werden kann. Die äußeren Schichten 150, 170 der Karte können aus einem Schutzlack oder aus Polymerfolien gebildet sein (Fig. 8). Ein Schutzlack wird nach dem Laminieren auf die laminierte Karte aufgetragen. Der Schutzlack oder diese äußeren Polymerfolien ist/sind transparent, sodass darunter liegende Informationen von außen sichtbar sind. In der Karte innenliegend befindet sich ein Transponderschaltkreis 200 mit einer Transponderantenne 210 und mit einem mit dieser elektrisch verbundenen RFID-Halbleiterchip 220 (Fig. 2, 3, 8). Der Transponderschaltkreis ist wegen einer darüber liegenden zumindest teilweise opaken Polymerlage 140 sowie des opaken Transponderträgers 230 nicht sichtbar (Fig. 8).

Die Karte 100 weist eine Vorderseite 101 und eine Rückseite (nicht dargestellt) auf (Fig. 1). Auf der Vorderseite befinden sich ein Gesichtsbild 110 des Inhabers der Karte sowie zwei Datenfelder, nämlich ein erstes Datenfeld 120 und ein zweites Datenfeld 130, mit Karten- und Inhaberdaten in Klarschrift und/oder in verschlüsselter Form. Außerdem ist ein Wappen 135 auf der Vorderseite der Karte wiedergegeben. Diese Darstellungen sind durch entsprechende Druckschichten hergestellt, die auf einer der äußeren Lagen 140, 160 der Karte oder aber auch unmittelbar unter der außenliegenden vorderseitigen Schutzlackschicht oder Polymerlage 150, liegen. Alternativ können diese Daten auch durch Laser-Engraving nachträglich im Inneren der Karte erzeugt worden sein.

Auf einer inneren Lage, dem Transponderträger 230, ist ein Transponderschaltkreis 200 aufgebracht (Fig. 2, 3). Der Transponderträger kann ebenso wie die übrigen Lagen 140, 150, 160, 170, aus denen die Karte 100 hergestellt ist, aus einem Polymer gebildet sein, beispielsweise aus Polycarbonat oder Polyethylenterephthalat. Dieses Material kann wiederum ungefüllt oder gefüllt sein. Es ist bevorzugt, dass dieses Material mit einem Pigment gefüllt ist, damit der Transponderträger 230 opak ist, sodass der Transponderschaltkreis von der Rückseite der Karte nicht sichtbar ist. Der Transponderschaltkreis ist in üblicher Weise aus einer Transponderantenne 210 und einem RFID-Halbleiterchip 220 gebildet. Die Transponderantenne ist in Form einer spiralförmig gewundenen Leiterbahn gebildet, die auf dem Transponderträger 230 durch Aufdrucken, beispielsweise mittels Siebdruck, einer Leitpaste oder einer Leitfarbe erzeugt ist. Die Leitpaste oder Leitfarbe ist durch in einem härtbaren Material enthaltene Metall- oder Halbleiterpartikel elektrisch leitfähig. Die Transponderantenne ist im vorliegenden Falle durch zwei Antennenwindungen 211, 212 gebildet. An den Enden der die Transponderantenne bildenden Leiterbahn befinden sich Anschlussflächen 213, 214 zur elektrischen Verbindung des RFID-Halbleiterchips mit der Transponderantenne. Da sich diese Anschlussflächen ebenso wie die entsprechenden Anschlusskontakte (nicht gezeigt) des RFID-Halbleiterchips unterhalb des Chips befinden, sind diese Flächen beispielsweise in Fig. 2, 3 nur angedeutet.

Der RFID-Halbleiterchip 220 ist vorzugsweise ein ungehäuster Chip (bare die). Der Chip ist mit Anschlusskontakten in Form von Kontakthöckern versehen (nicht gezeigt). Zur Montage des Chips auf der Transponderantenne 210 und dem Transponderträger 230 wird ein anisotroper Leitkleber verwendet, um den Chip dort mechanisch zu verankern und einen elektrischen Kontakt zwischen den Kontakthöckern des Chips und den Anschlussflächen der Transponderantenne herzustellen. Der Chip wird in der Flip-Chip-Technik, d.h. über Kopf mit den Kontakthöckern nach unten, in dem Montagebereich des Chips über den Anschlussflächen 213, 214 der Transponderantenne platziert und dort befestigt, wobei sich elektrische Verbindungen jeweils eines Anschlusskontaktes des Chips mit einer Anschlussfläche der Transponderantenne bilden.

Die Leiterbahn der Transponderantenne 210 geht von der ersten Anschlussfläche 213 aus, folgt dann einer ersten Windungsbahn 211 ungefähr parallel zu den Seitenrändern des Transponderträgers 230 und gelangt dann wieder in den Chipbereich, unterquert dort den Chip 220 und folgt anschließend noch einer zweiten Windungsbahn 212 parallel zu der ersten Windungsbahn, bis sie in der zweiten Anschlussfläche 214 unter dem Chip endet. Somit überbrückt der Chip die aus zwei Windungen gebildete Transponderantenne.

In dem Transponderträger 230 ist beispielsweise durch Ausstanzen eine rechteckige Ausnehmung (Kavität) 240 gebildet (Fig. 8). In diese Ausnehmung kann das erfindungsgemäße Anzeigemodul 300 vor dem Zusammentragen der Polymerlagen 140, 160 und des Transponderträgers 230 mit dem darauf befindlichen Transponderschaltkreis 200 eingefügt werden. Hierzu weist die Ausnehmung genau dieselben Maße und dieselbe Form auf wie das Anzeigemodul (Fig. 8). Dadurch kann das Anzeigemodul optimal in diese Ausnehmung eingepasst werden. Beispielsweise kann die Ausnehmung mit demselben Stanzwerkzeug erzeugt werden, mit dem auch der Anzeigeträger 330 des Anzeigemoduls in einem Stanzvorgang hergestellt wird.

Der Anzeigeträger 330 des Anzeigemoduls 300 befindet sich in den Fällen der in Fig. 2, 3, 6, 8 gezeigten Ausführungsformen in derselben Ebene wie der Transponderträger 230 und ist in diesen eingesetzt. Alternativ kann der Anzeigeträger auch in eine andere Polymerlage eingesetzt werden, wenn diese eine hierfür passende Kavität aufweist, beispielsweise in eine Polymerlage 140, die oberhalb des Transponderschaltkreises 200 angeordnet ist, oder auch in eine Polymerlage 160 unterhalb des Transponderschaltkreises (Fig. 8), oder der Anzeigeträger kann eine eigene vollständige Lage der Karte 100 ausbilden.

Der Anzeigeträger 330 ist wie der Transponderträger 230 vorzugsweise aus einem Polymermaterial gebildet. Dieses Polymermaterial ist ebenso wie das des Transponderträgers unter Berücksichtigung der Anforderungen beim gemeinsamen Laminierprozess auszuwählen, wobei eine Abstimmung hinsichtlich der zu verbindenden Materialien, auch der anderen Polymerlagen 140, 160 der Karte 100, vorzunehmen ist. Vorzugsweise besteht daher auch der Anzeigeträger im vorliegenden Falle aus Polycarbonat oder Polyethylenterephthalat. Der Anzeigeträger kann ebenso wie der Transponderträger ungefüllt oder gefüllt sein. Da ein mögliches (sekundäres) Sicherheitsmerkmal gemäß der vorliegenden Erfindung darin besteht, dass die Transmission des Anzeigemoduls ortsabhängig variiert, muss, wenn dieses Sicherheitsmerkmal verwirklicht werden soll, gewährleistet sein, dass der Anzeigeträger in dem Spektralbereich eine für die Wahrnehmung dieses Sicherheitsmerkmals ausreichende Transmission aufweist, in dem die Verifikation des Sicherheitsmerkmals vorgenommen werden soll. Da die Transmission des Anzeigemoduls vorzugsweise im sichtbaren Spektralbereich ortsabhängig variiert, hat der Anzeigeträger dann eine Transmission im sichtbaren Spektralbereich aufzuweisen, sofern dieses Sicherheitsmerkmal realisiert werden soll. Dies setzt dann daher voraus, dass der Anzeigeträger nicht opak sondern transparent oder zumindest transluzent ist.

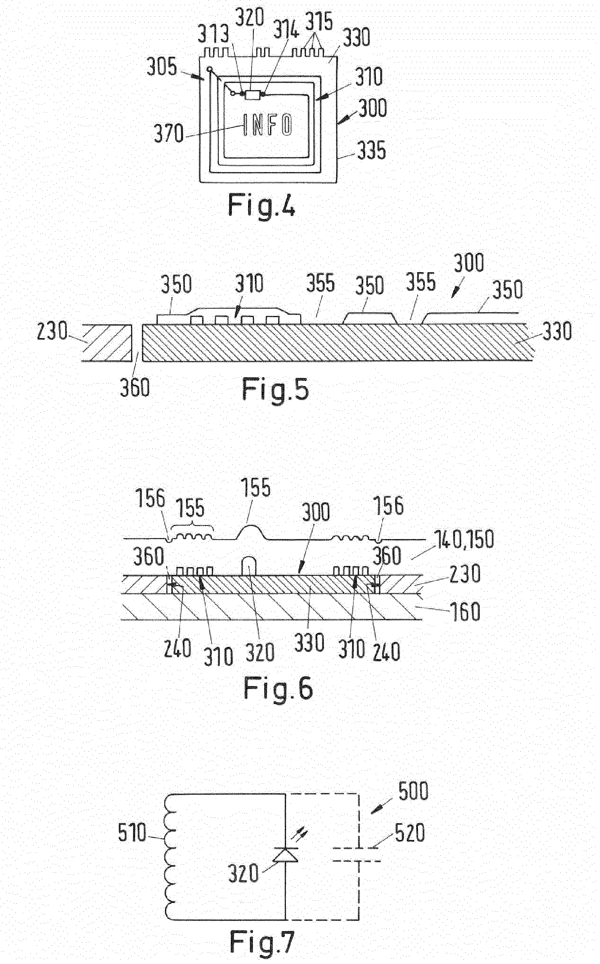

Auf dem Anzeigeträger 330 ist eine Antennenleiterbahn 310 gebildet, die ebenso wie die Transponderantenne 210 durch mindestens eine Windung 311, 312 gekennzeichnet ist. Vorzugsweise ist diese Leiterbahn durch mehrere, vorzugsweise drei, vier, fünf oder sechs, Windungen gebildet, die parallel zueinander angeordnet sind, sodass die Leiterbahn spiralförmig ausgebildet ist. In der in Fig. 2 gezeigten Ausführungsform weist die Antennenleiterbahn zwei Windungen und in der in Fig. 3 gezeigten Ausführungsform drei Windungen auf. Die Antennenleiterbahn weist an ihren Enden wiederum Anschlussflächen 313, 314 auf (Fig. 3, 4), die zur elektrischen Verbindung zu einem Anzeigeelement 320, im vorliegenden Falle zu einer LED oder OLED, dient. Anstelle eines optische Signale aussendenden Anzeigeelements kann auch ein akustische oder mechanische Signale aussendendes Anzeigeelement Bestandteil des Anzeigemoduls 300 und hierzu mit der Antennenleiterbahn verbunden sein.

Die Schaltungsanordnung des Anzeigemoduls 300 stellt wie die des Transponderschaltkreises 200 einen Schwingkreis 500 dar (Fig. 7), der durch eine Induktivität 510 und eine Kapazität 520 (nur strichliert angedeutet) gebildet ist, wobei die Induktivität durch die Antennenleiterbahn 310 und die Kapazität durch das Anzeigeelement 320 gebildet sind. Nicht berücksichtigt sind in dieser Darstellung allfällige ohmsche Widerstände, die den einzelnen Komponenten dieses Schwingkreises inhärent sind und die den Schwingkreis dämpfen. Die Impedanz dieses Schwingkreises ist auf die Frequenz des eingestrahlten Wechselfeldes abzustimmen. Die Induktivität der Antennenleiterbahn ist durch deren geometrische Abmessungen, Form, spezifischen Widerstand und Querschnitt, durch die Anzahl von deren Windungen und die Abstände der Windungen voneinander gegeben. Die Kapazität des Anzeigeelements ist durch dessen Art, hier eine LED oder OLED, und dessen elektrische Eigenschaften gegeben.

Die Antennenleiterbahn 310 ist wie die Transponderantenne 210 durch Aufdrucken einer Leitpaste oder Leitfarbe, beispielsweise mittels Siebdruck, auf den Anzeigeträger 330 hergestellt. An den Enden der Antennenleiterbahn befinden sich die Anschlussflächen 313, 314 zur elektrischen Kontaktierung des Anzeigeelements 320. Da das Anzeigeelement eine wesentlich kleinere Basisfläche aufweist als ein RFID-Halbleiterchip 220, ist es im Allgemeinen nicht dazu geeignet, die Windungen 311, 312 der Antennenleiterbahn zu überbrücken. Daher muss in diesem Falle eine der peripheren Windungen die anderen Windungen kreuzend auf die andere Seite des Windungsstranges geführt werden, also entweder die äußere Leiterbahn des Stranges nach innen oder die innere Leiterbahn nach außen. Im ersteren Falle wird das Anzeigeelement in dem von den Windungen umschlossenen Flächenbereich montiert und im letzteren Falle im Außenbereich. Wenn das Anzeigeelement wie der RFID-Halbleiterchip Kontakthöcker als Anschlusskontakte aufweist und ungehäust vorliegt, kann es wie dieser in der Flip-Chip-Technik kopfüber mittels eines anisotropen Leitklebers im Bereich der Anschlussflächen 313, 314 der Antennenleiterbahn auf den Anzeigeträger und damit auch auf die Anschlussflächen aufgesetzt werden, wobei eine elektrische Verbindung zwischen jeweils einem Anschlusskontakt des Anzeigeelements mit einer Anschlussfläche der Antennenleiterbahn hergestellt wird.

Eine einfache Ausführungsform gemäß der vorliegenden Erfindung ist in Fig. 2 gezeigt. Dort nimmt ein Transponderschaltkreis 200 mit einer Transponderantenne 210 und einem RFID-Halbleiterchip 220 praktisch die gesamte Fläche des Transponderkarteninlets 230 ein. Innerhalb der von der Transponderantenne umschlossenen Fläche befindet sich ein Anzeigemodul 300, das eine Antennenleiterbahn 310 mit zwei Windungen 311, 312 sowie ein Anzeigeelement 320 aufweist. Das Anzeigemodul ist in eine Kavität 240 in den Transponderträger 230 eingesetzt (Fig. 8).

Gemäß einer nicht beanspruchten Variante weist nur die Antennenleiterbahn 310 eine Gestaltung auf, die eine Information codiert. Erfindungsgemäß weist der Rand bzw. Umriss 335 des Anzeigemoduls 300 eine Gestaltung auf, die eine Information codiert. Oder beide Elemente, Antennenleiterbahn und Anzeigeträgerrand, können jeweils eine spezielle Gestaltung aufweisen, die jeweils eine Information codiert.

In Fig. 3 ist eine erste eine Ausführungsform von Sicherheitsmerkmalen mit einer speziellen Gestaltung der Antennenleiterbahn 310 gezeigt, die eine Information codiert. In diesem Falle gibt die Form der Antennenleiterbahn ein Logo in vereinfachter Darstellung wieder und weist somit beispielsweise auf den Hersteller oder die ausgebende Stelle der Karte 100, beispielsweise ein Staat oder Unternehmen, hin. Die Information besteht in diesem Falle darin, dass ein beliebiger Benutzer der Karte sofort erkennt, von welcher Institution die Karte ausgegeben oder hergestellt worden ist.

Das Anzeigemodul 300 ist im Falle dieser ersten Ausführungsform vorzugsweise in eine Kavität 240 in dem Transponderträger 230 eingesetzt und neben dem Transponderschaltkreis 200 angeordnet.

In Fig. 4 ist eine erfindungsgemäße Ausführungsform von Sicherheitsmerkmalen gemäß der vorliegenden Erfindung gezeigt, nämlich das Sicherheitsmerkmal, das durch eine spezielle Gestaltung des Randes bzw. Umrisses 335 des Anzeigemoduls 300 gebildet wird, wobei diese Gestaltung eine Information codiert. In diesem Falle ist der Anzeigeträger 330 des Anzeigemoduls 300 rechteckig mit vier Seitenrändern ausgebildet. Einer dieser Seitenränder weist nach außen vorspringende Finger 315 auf, die in einem bestimmten Rhythmus an diesem Seitenrand angeordnet sind, nämlich, von links betrachtet, zuerst drei Finger, danach zwei Finger und schließlich nochmals vier Finger mit jeweils glatten Randabschnitten dazwischen. Diese Abfolge kann eine bestimmte Information codieren. Im vorliegenden Falle sind alle Finger gleich breit und mit gleichem Abstand voneinander beabstandet sowie gleich lang. Alternativ könnten die Finger auch unterschiedlich lang und/oder unterschiedlich breit und/oder mit unterschiedlichem Abstand voneinander beabstandet sein.

Die Ausnehmung (Kavität) 240 in dem Dokumentenrohling oder in einer Polymerlage 230, beispielsweise dem Transponderträger, wie in Fig. 8 gezeigt, weist in einem derartigen Falle exakt dieselbe Form auf wie die Gestaltung dieses Seitenrandes 335. Eine derartige Form kann sehr leicht durch Ausstanzen erzeugt werden.

Die in Fig. 3 und Fig. 4 gezeigten beiden (ersten und zweiten) Ausführungsformen von Sicherheitsmerkmalen gemäß der vorliegenden Beschreibung können entweder einzeln realisiert sein oder zusammen in demselben Anzeigemodul 300, d.h. das in Fig. 3 gezeigt nicht beanspruchte Anzeigemodul kann in einer erfindungsgemäßen Ausführungsform zusätzlich eine Informationen codierende Gestaltung des äußeren Randes/Umrisses 335 des Moduls aufweisen, und das in Fig. 4 gezeigte erfindungsgemäße Anzeigemodul kann zusätzlich eine spezielle Gestaltung der Antennenleiterbahn 310 aufweisen.

Zusätzlich kann die optische Dichte des Anzeigemoduls 300 in einer besonders bevorzugten Weiterbildung der vorliegenden Erfindung, wie auch schon in Fig. 4 gezeigt, ortsabhängig variieren. Im vorliegenden Falle variiert die optische Dichte des Anzeigeträgers 330 derart, dass bei einer Betrachtung des Moduls das Wort "INFO" erscheint. Selbstverständlich können auch völlig andere Darstellungen, Zeichen, Symbole, Bilder oder dergleichen in Form eines derartigen Wasserzeichens 370, das nur bei einer Durchlichtbetrachtung erkennbar ist, verwendet werden. Die ortsabhängige Variation der optischen Dichte kann beispielsweise durch eine zusätzliche Schicht 350 auf der Vorderseite oder der Rückseite des Anzeigemoduls 300 variiert werden, indem nämlich beispielsweise eine Lötstoppmaske, die üblicherweise zum Abdecken von elektrischen Leiterbahnen verwendet wird, auf die Antennenleiterbahn 310 aufgebracht und dann strukturiert wird, vorzugsweise bevor das Anzeigeelement 320 montiert wird (Fig. 5). Diese Strukturierung kann beispielsweise durch entsprechende Durchbrechungen 355 in dieser Schicht erzeugt werden, indem zum Beispiel die den Buchstaben von "INFO" entsprechenden Flächenbereiche in der Schicht ausgespart werden oder der Schriftzug "INFO" durch diese Schicht gebildet wird. Die Verfahrensweise für derartige Strukturierungen ist dem Fachmann bekannt.

Ein spezielles weiteres Sicherheitsmerkmal ergibt sich durch die Realisierung der vorstehend beschriebenen speziellen Gestaltungen der beiden primären Sicherheitsmerkmale, nämlich der Form der Antennenleiterbahn 310 und der Form des Randes/Umrisses 335 des Anzeigemoduls 300: Dies stellt eine dritte Ausführungsform von Sicherheitsmerkmalen gemäß der vorliegenden Erfindung dar und ist schematisch in Fig. 6 gezeigt. Durch die erhabenen Strukturen des Anzeigeschaltkreises 305 ergeben sich entsprechende Erhebungen 155 im Bereich der Antennenleiterbahn in einer über dem Anzeigemodul angeordneten weiteren Schicht oder Lage 140, 150 der Identitätskarte 100. Beispielsweise wird über dem Anzeigemodul eine Schutzlackschicht 150 appliziert, die die erhabenen Strukturen der Antennenleiterbahn und des Anzeigeelements 320 weitgehend formgetreu umgibt und damit nachzeichnet. Ferner entstehen durch feinste Fugen 360 zwischen dem Anzeigeträger 330 und dem Innenrand der Kavität 240 in der Lage in dem Kartenrohling, in den das Anzeigemodul eingesetzt ist und die durch geringfügige Fehlanpassungen der beiden Formen aneinander entstehen, Vertiefungen 156 in der darüber angeordneten Schutzlackschicht 150, da der Lack in diese Fugen eintritt und daher den Umriss des Anzeigemoduls an der Oberfläche durch derartige Vertiefungen nachzeichnet. Entsprechende dreidimensionale Strukturen bilden sich auch dann aus, wenn anstelle einer Schutzlackschicht eine dünne Polymerlage über dem Anzeigemodul eingesetzt wird. Diese Strukturen können, wenn sie ausreichend hoch bzw. tief sind, beispielsweise mindestens 30 µm hoch bzw. tief, ertastet werden. Ansonsten sind sie beispielsweise bei reflektierendem Lichteinfall sichtbar.

Damit die primären Sicherheitselemente von einem Betrachter oder einer Verifikationsvorrichtung erfasst werden können, sind zumindest die oberhalb des Anzeigemoduls 300 befindlichen Materiallagen und -schichten transparent oder transluzent auszubilden. Falls die Identitätskarte 100 zusätzlich zu dem Anzeigemodul einen Transponderschaltkreis 200 aufweist, der vorzugsweise von außen nicht wahrnehmbar sein soll, so ist zwar in dem Oberflächenbereich, in dem sich dieser Schaltkreis befindet, oberhalb dieses Schaltkreises ein opakes Material 145 anzuordnen, wobei der Oberflächenbereich aber auszunehmen ist, in dem sich das Anzeigemodul befindet. Hierzu kann beispielsweise die in Fig. 8 gezeigte Polymerlage 140 oberhalb des Transponderschaltkreises und des Anzeigemoduls eine opake Druckschicht aufweisen, die durch ein Fenster 147 in dem Oberflächenbereich unterbrochen ist, in dem sich das Anzeigemodul befindet.

Damit auch das sekundäre Sicherheitsmerkmal von einem Betrachter oder einer Verifikationsvorrichtung erfasst werden kann, sind nicht nur die oberhalb des Anzeigemoduls 300 befindlichen Materiallagen und -schichten 140, 150 sondern auch die unterhalb des Anzeigemoduls angeordneten Materiallagen und -schichten 160, 170 transparent oder transluzent auszubilden, zumindest in dem Oberflächenbereich, in dem sich das Anzeigemodul befindet.

Zur Herstellung der Identitätskarte 100 wird zunächst durch Ausstanzen oder Schneidplotten oder Laserschneiden eine Ausnehmung (Kavität) 240 in dem Transponderträger 230 erzeugt. Diese Ausnehmung ist so groß oder geringfügig größer als der Außenrand 335 des Anzeigeträgers 330 des Anzeigemoduls 300. Dann wird das ansonsten bereits montierte Anzeigemodul in diese Ausnehmung eingesetzt (Fig. 8). Ferner kann eine Polymerlage 140 mit einer flächigen Druckschicht 145 im Oberflächenbereich des Transponderschaltkreises 200 bedruckt sein, wobei der Oberflächenbereich 147 von dem Druck ausgenommen wird, in dem sich das Anzeigemodul befindet. Allerdings ist die Bildung des Fensters innerhalb einer Druckschicht auf einer Polymerlage nicht unbedingt erforderlich, da von dem Anzeigeelement ausgehendes Licht auch durch transluzente Polymerfolien hindurch erkennbar ist. Das Ensemble aus Transponderschaltkreis und Anzeigemodul, der gegebenenfalls bedruckten Polymerlage sowie einer weiteren Polymerlage 160 werden mittels Lamination zu einem monolithischen Laminat verbunden. Auf dieses Laminat kann ferner an jeder Seite noch eine Schutzlackschicht 150, 170 aufgebracht werden.

Die vorstehend beschriebene Identitätskarte 100 in den unterschiedlichen Ausführungsformen mit verschiedenen Sicherheitsmerkmalen gemäß der vorliegenden Erfindung kann zum einen mit einem Reader 600 auf bekannte Art und Weise kommunizieren, beispielsweise bei einer Frequenz von 13,56 MHz, um einen Datenaustausch mit dem auf der Karte in dem Transponderschaltkreis 200 befindlichen RFID-Halbleiterchip 220 durchzuführen. Durch das von dem Reader erzeugte elektromagnetische Feld wird auch ein Signal in dem Anzeigeschaltkreis 305 des Anzeigemoduls 300 erzeugt. Damit dieses Signal eine bestimmte Signalfolge aufweist, wird es in vorgegebener Weise moduliert. Dadurch wird von dem optischen Anzeigeelement 320 ein optisches Signal erzeugt, das von einem Empfänger 700, beispielsweise einem Smartphone, detektiert werden kann.

### Bezugszeichenliste

- 100: Wert- oder Sicherheitsdokument, Identitätskarte
- 101: Vorderseite
- 110: Gesichtsbild
- 120: erstes Datenfeld
- 130: zweites Datenfeld
- 135: Wappen
- 140: vorderseitige Polymerlage
- 145: opakes Material, opake Druckschicht
- 147: Oberflächenbereich, Fenster
- 150: äußere Schicht, vorderseitige Schutzlackschicht, Polymerfolie
- 155: Erhebungen
- 156: Vertiefungen
- 160: rückseitige Polymerlage
- 170: äußere Schicht, rückseitige Schutzlackschicht, Polymerfolie
- 200: Transponderschaltkreis
- 210: Transponderantenne
- 211,212: Transponderantennenwindungen
- 213, 214: Anschlussflächen der Transponderantenne
- 220: RFID-Halbleiterchip
- 230: Transponderträger, Transponderkarteninlet, Polymerlage
- 240: Ausnehmung (Kavität)
- 300: Anzeigemodul
- 305: Anzeigeschaltkreis
- 310: Antennenleiterbahn
- 311, 312: Antennenleiterbahnwindungen
- 313, 314: Anschlussflächen der Antennenleiterbahn
- 315: vorspringender Finger
- 320: Anzeigeelement, LED, OLED
- 330: Anzeigeträger
- 335: Anzeigeträgerrand, Umriss
- 350: Schicht, Wasserzeichenschicht, Lötstopplackschicht
- 355: Durchbrechungen
- 360: Fuge
- 370: Wasserzeichen
- 500: Schwingkreis
- 510: Induktivität
- 520: Kapazität
- 600: Schreib-/Lesegerät, Reader
- 700: Verifikationsgerät, Empfänger, Smartphone

## Patentansprüche

1. In einen Rohling eines Wert- oder Sicherheitsdokuments (100) integrierbares Anzeigemodul (300), aufweisend einen Anzeigeträger (330) und mindestens einen auf dem Anzeigeträger (330) angeordneten Anzeigeschaltkreis (305), wobei der mindestens eine Anzeigeschaltkreis (305) durch jeweils mindestens eine Antennenleiterbahn (310) und mindestens ein mit der mindestens einen Antennenleiterbahn (310) elektrisch verbundenes Anzeigeelement (320) gebildet ist, **dadurch gekennzeichnet, dass** die Form des Umrisses (335) des Anzeigemoduls (300) eine Information codiert, dadurch dass in einem oder mehreren Rändern vorspringende Finger gebildet sind, wobei deren Anzahl, Anordnung, Breite und/oder Abstände voneinander die Information codieren oder dadurch dass ein oder mehrere Ränder des Anzeigemoduls (300) in regelmäßig wiederkehrenden Mustern in Form eines Sägezahn-, Wellenlinien-, Sinus- oder Rechteckprofils ausgebildet sind, wobei die Profile einander abwechseln oder/und von glatten geraden Abschnitten unterbrochen sind.

2. In einen Rohling eines Wert- oder Sicherheitsdokuments (100) integrierbares Anzeigemodul (300) nach Anspruch 1, **dadurch gekennzeichnet, dass** das Anzeigemodul (300) eine lokal variierende Transmission für elektromagnetische Strahlung aufweist, die ein eine Information codierendes Muster ergibt.

3. In einen Rohling eines Wert- oder Sicherheitsdokuments (100) integrierbares Anzeigemodul (300) nach Anspruch 2, **dadurch gekennzeichnet, dass** die Transmission ortsabhängig variiert, indem die Dicke des Anzeigemoduls (300) ortsabhängig variiert und/oder sich mindestens eine Schicht (350) auf dem Anzeigeträger (330) befindet, deren Vorhandensein und/oder Dicke und/oder optische Dichte ortsabhängig variiert.

4. In einen Rohling eines Wert- oder Sicherheitsdokuments (100) integrierbares Anzeigemodul (300) nach einem der vorstehenden Ansprüche, **dadurch gekennzeichnet, dass** das mindestens eine Anzeigeelement (320) dazu ausgebildet ist, dass es ein optisches und/oder akustisches und/oder mechanisches Signal abgibt.

5. In einen Rohling eines Wert- oder Sicherheitsdokuments (100) integrierbares Anzeigemodul (300) nach einem der vorstehenden Ansprüche, **dadurch gekennzeichnet, dass** das mindestens eine Anzeigeelement (320) eine LED oder OLED ist.

6. In einen Rohling eines Wert- oder Sicherheitsdokuments (100) integrierbares Anzeigemodul (300) nach einem der vorstehenden Ansprüche, **dadurch gekennzeichnet, dass** die mindestens eine Antennenleiterbahn (310) mittels einer Leitpaste oder Leitfarbe gedruckt ist.

7. In einen Rohling eines Wert- oder Sicherheitsdokuments (100) integrierbares Anzeigemodul (300) nach einem der vorstehenden Ansprüche, **dadurch gekennzeichnet, dass** es zusätzlich einen mindestens eine Transponderantenne (210) und mindestens einen RFID-Halbleiterchip (220) aufweisenden Transponderschaltkreis (200) aufweist, der von dem mindestens einen Anzeigeschaltkreis (305) elektrisch getrennt ist.

8. Wert- oder Sicherheitsdokument (100), aufweisend mindestens ein Anzeigemodul (300) nach einem der Ansprüche 1 bis 7, wobei das mindestens eine Anzeigemodul (300) jeweils mindestens einen Anzeigeschaltkreis (305) mit jeweils mindestens einer Antennenleiterbahn (310) und mindestens einem mit dieser elektrisch verbundenen Anzeigeelement (320) aufweist und wobei das Anzeigemodul (300) in dem Wert- oder Sicherheitsdokument (100) integriert ist.

9. Wert- oder Sicherheitsdokument (100) nach Anspruch 8, **dadurch gekennzeichnet, dass** sich die mindestens eine Antennenleiterbahn (310) und/oder das mindestens eine Anzeigeelement (320) jeweils durch Vertiefungen (156) und/oder Erhebungen (155) an der Oberfläche des Wert- oder Sicherheitsdokuments (100) abzeichnen.

10. Wert- oder Sicherheitsdokument (100) nach einem der Ansprüche 8 und 9, **dadurch gekennzeichnet, dass** sich mindestens eine Fuge (360), die sich zwischen dem mindestens einen in dem Wert- oder Sicherheitsdokument (100) integrierten Anzeigemodul (300) und einem umgebenden Material des Wert- oder Sicherheitsdokuments (100) bildet, durch Vertiefungen (156) und/oder Erhebungen (155) an der Oberfläche des Wert- oder Sicherheitsdokuments (100) abzeichnet.

11. Wert- oder Sicherheitsdokument (100) nach einem der Ansprüche 8 bis 10, **dadurch gekennzeichnet, dass** es zusätzlich einen mindestens eine Transponderantenne (210) und mindestens einen RFID-Halbleiterchip (220) aufweisenden Transponderschaltkreis (200) aufweist.

12. Verfahren zum Verifizieren des Wert- oder Sicherheitsdokuments (100) gemäß einem der Ansprüche 8 bis 11, **dadurch gekennzeichnet, dass** es folgende Verfahrensschritte umfasst:
(a) Bereitstellen des mindestens ein Anzeigemodul (300) aufweisenden Wert- oder Sicherheitsdokuments (100), wobei das mindestens eine Anzeigemodul (300) jeweils mindestens einen Anzeigeschaltkreis (305) mit jeweils mindestens einer Antennenleiterbahn (310) und mit jeweils mindestens einem mit dieser elektrisch verbundenen Anzeigeelement (320) aufweist und wobei das mindestens eine Anzeigemodul (300) in dem Wert- oder Sicherheitsdokument (100) integriert ist und wobei das Wert- oder Sicherheitsdokument (100) außerdem einen Transponderschaltkreis (200) aufweist;
(b) Durchführen eines Datenaustausches zwischen dem Transponderschaltkreis (200) und einem Schreib-/Lesegerät (600) vermittels eines elektromagnetischen Wechselfeldes;
(c) Erzeugen eines elektrischen Signals in dem mindestens einen Anzeigeelement (320) des mindestens einen Anzeigemoduls (300) aufgrund des elektromagnetischen Wechselfeldes; und
(d) Erzeugen eines von einem Betrachter oder einem Verifikationsgerät (700) erfassbaren Signals durch das mindestens eine Anzeigeelement (320).

## Claims

1. A display module (300) that can be integrated into a blank of a valuable or security document (100), having a display carrier (330) and at least one display circuit (305) arranged on the display carrier (330), the at least one display circuit (305) being respectively formed by at least one antenna conductor (310) and at least one display element (320) that is electrically connected to the at least one antenna conductor (310), **characterized in that** the shape of the outline (335) of the display module (300) encodes information through formation of protruding fingers in one or more edges, with the number, arrangement, or width thereof and/or spacing thereof from one another encoding the information, or **in that** one or more edges of the display module (300) are formed in regularly recurring patterns in the form of a sawtooth, wavy-lined, sinusoidal, or rectangular profile, with the profiles alternating and/or being interrupted by smooth straight sections.

2. The display module (300) as set forth in claim 1 that can be integrated into a blank of a valuable or security document (100), **characterized in that** the display module (300) has a locally varying transmission for electromagnetic radiation which results in a pattern that encodes information.

3. The display module (300) as set forth in claim 2 that can be integrated into a blank of a valuable or security document (100), **characterized in that** the transmission varies in a location-dependent manner through variation of the thickness of the display module (300) in a location-dependent manner and/or by virtue of the fact that at least one layer (350) is located on the display carrier (330) whose presence and/or thickness and/or optical density varies in a location-dependent manner.

4. The display module (300) as set forth in one of the preceding claims that can be integrated into a blank of a valuable or security document (100), **characterized in that** the at least one display element (320) is designed to emit an optical and/or acoustic and/or mechanical signal.

5. The display module (300) as set forth in one of the preceding claims that can be integrated into a blank of a valuable or security document (100), **characterized in that** the at least one display element (320) is an LED or OLED.

6. The display module (300) as set forth in one of the preceding claims that can be integrated into a blank of a valuable or security document (100), **characterized in that** the at least one antenna conductor (310) is printed using a conductive paste or conductive ink.

7. The display module (300) as set forth in one of the preceding claims that can be integrated into a blank of a valuable or security document (100), **characterized in that** it additionally comprises a transponder circuit (200) that is electrically isolated from the at least one display circuit (305) and has at least one transponder antenna (210) and at least one RFID semiconductor chip (220).

8. A valuable or security document (100) having at least one display module (300) as set forth in one of claims 1 to 7, wherein the at least one display module (300) has at least one respective display circuit (305) with at least one respective antenna conductor (310) and at least one display element (320) that is electrically connected thereto, and wherein the display module (300) is integrated into the valuable or security document (100).

9. The valuable or security document (100) as set forth in claim 8, **characterized in that** the at least one antenna conductor (310) and/or the at least one display element (320) are each demarcated by depressions (156) and/or elevations (155) on the surface of the valuable or security document (100).

10. The valuable or security document (100) as set forth in one of claims 8 and 9, **characterized in that** at least one joint (360) which is formed between the at least one display module (300) that is integrated into the valuable or security document (100) and a surrounding material of the valuable or security document (100) is demarcated by depressions (156) and/or elevations (155) on the surface of the valuable or security document (100).

11. The valuable or security document (100) as set forth in one of claims 8 to 10, **characterized in that** it additionally comprises a transponder circuit (200) having at least one transponder antenna (210) and at least one RFID semiconductor chip (220).

12. A method for verifying the valuable or security document (100) as set forth in one of claims 8 to 11, **characterized in that** it comprises the following method steps:
(a) Providing the valuable or security document (100) having at least one display module (300), wherein the at least one display module (300) each has at least one display circuit (305) with at least one respective antenna conductor (310) and with at least one respective display element (320) that is electrically connected thereto, wherein the at least one display module (300) is integrated into the valuable or security document (100), and wherein the valuable or security document (100) also has a transponder circuit (200);
(b) performing a data exchange between the transponder circuit (200) and a read/write device (600) by means of an alternating electromagnetic field;
(c) generating an electrical signal in the at least one display element (320) of the at least one display module (300) on the basis of the alternating electromagnetic field; and
(d) generating a signal that can be detected by an observer or a verification device (700) by means of the at least one display element (320).

## Revendications

1. Module d'affichage (300) intégrable dans une ébauche d'un document de valeur ou de sécurité (100), ledit module comportant un support d'affichage (330) et au moins un circuit d'affichage (305) disposé sur le support d'affichage (330), l'au moins un circuit d'affichage (305) étant formé par au moins une piste d'antenne conductrice (310) et au moins un élément d'affichage (320) relié électriquement à l'au moins une piste d'antenne conductrice (310), **caractérisé en ce que** la forme du contour (335) du module d'affichage (300) code une information du fait que des doigts saillants sont formés dans un ou plusieurs bords, leur nombre, disposition, largeur et/ou espacements codant l'information, ou du fait qu'un ou plusieurs bords du module d'affichage (300) sont formés selon des motifs récurrents réguliers sous la forme d'un profil sinusoïdal ou rectangulaire, en dents de scie ou en ligne ondulée, les profils alternant entre eux et/ou étant interrompus par des portions droites lisses.

2. Module d'affichage (300) intégrable dans une ébauche d'un document de valeur ou de sécurité (100) selon la revendication 1, **caractérisé en ce que** le module d'affichage (300) comporte une transmission localement variable du rayonnement électromagnétique, ce qui se traduit par un motif codant une information.

3. Module d'affichage (300) intégrable dans une ébauche d'un document de valeur ou de sécurité (100) selon la revendication 2, **caractérisé en ce que** la transmission varie selon l'endroit du fait que l'épaisseur du module d'affichage (300) varie selon l'endroit et/ou au moins une couche (350), dont la présence et/ou l'épaisseur et/ou la densité optique varie selon l'endroit, est située sur le support d'affichage (330).

4. Module d'affichage (300) intégrable dans une ébauche de document de valeur ou de sécurité (100) selon l'une des revendications précédentes, **caractérisé en ce que** l'au moins un élément d'affichage (320) est conçu de manière à délivrer un signal optique et/ou acoustique et/ou mécanique.

5. Module d'affichage (300) intégrable dans une ébauche d'un document de valeur ou de sécurité (100) selon l'une des revendications précédentes, **caractérisé en ce que** l'au moins un élément d'affichage (320) est une LED ou une OLED.

6. Module d'affichage (300) intégrable dans une ébauche d'un document de valeur ou de sécurité (100) selon l'une des revendications précédentes, **caractérisé en ce que** l'au moins une piste d'antenne conductrice (310) est imprimée à l'aide d'une pâte conductrice ou d'une encre conductrice.

7. Module d'affichage (300) intégrable dans une ébauche de document de valeur ou de sécurité (100) selon l'une des revendications précédentes, **caractérisé en ce qu'**il comporte en outre un circuit de transpondeur (200) qui comporte au moins une antenne de transpondeur (210) et au moins une puce semi-conductrice RFID (220) et qui est isolé électriquement de l'au moins un circuit d'affichage (305) .

8. Document de valeur ou de sécurité (100) comportant au moins un module d'affichage (300) selon l'une des revendications 1 à 7, l'au moins un module d'affichage (300) comportant au moins un circuit d'affichage (305) pourvu d'au moins une piste d'antenne conductrice (310) et au moins un élément d'affichage (320) relié électriquement à celle-ci et le module d'affichage (300) étant intégré dans le document de valeur ou de sécurité (100) .

9. Document de valeur ou de sécurité (100) selon la revendication 8, **caractérisé en ce que** l'au moins une piste d'antenne conductrice (310) et/ou l'au moins un élément d'affichage (320) se dessinent à travers des dépressions (156) et/ou des surélévations (155) sur la surface du document de valeur ou de sécurité (100).

10. Document de valeur ou de sécurité (100) selon l'une des revendications 8 et 9, **caractérisé en ce qu'**au moins une jonction (360), qui est formée entre l'au moins un module d'affichage (300) intégré dans le document de valeur ou de sécurité (100) et un matériau environnant du document de valeur ou de sécurité (100), se dessine à travers des dépressions (156) et/ou des surélévations (155) sur la surface du document de valeur ou de sécurité (100) .

11. Document de valeur ou de sécurité (100) selon l'une des revendications 8 à 10, **caractérisé en ce qu'**il comprend en outre un circuit de transpondeur (200) comportant au moins une antenne de transpondeur (210) et au moins une puce semi-conductrice RFID (220).

12. Procédé de vérification du document de valeur ou de sécurité (100) selon l'une des revendications 8 à 11, **caractérisé en ce qu'**il comprend les étapes suivantes :
(a) fournir le document de valeur ou de sécurité (100) comportant au moins un module d'affichage (300), l'au moins un module d'affichage (300) comportant au moins un circuit d'affichage (305) pourvu d'au moins une piste d'antenne conductrice (310) et d'au moins un élément d'affichage (320) relié électriquement à celle-ci et l'au moins un module d'affichage (300) étant intégré dans le document de valeur ou de sécurité (100) et le document de valeur ou de sécurité (100) comportant également un circuit de transpondeur (200) ;
(b) effectuer un échange de données entre le circuit de transpondeur (200) et un dispositif de lecture/écriture (600) au moyen d'un champ électromagnétique alternatif ;
(c) générer un signal électrique dans l'au moins un élément d'affichage (320) de l'au moins un module d'affichage (300) sur la base du champ électromagnétique alternatif ; et
(d) générer par le biais de l'au moins un élément d'affichage (320) un signal qui peut être détecté par un observateur ou un dispositif de vérification (700).
